# EUROPÄISCHE PATENTSCHRIFT

(11) **EP 4 098 500 B1**
(45) Veröffentlichungstag und Bekanntmachung des Hinweises auf die Patenterteilung: **13.03.2024**
(21) Anmeldenummer: 22172427.1
(22) Anmeldetag: 10.05.2022
(51) Int. Cl.: B60T 13/26, B60T 13/66, B60T 13/68, B60T 17/22

(54) **FEDERSPEICHERSTEUERUNGSEINRICHTUNG UND FEDERSPEICHERSTEUERUNGSVERFAHREN FÜR EINE VORRICHTUNG ZUM BREMSEN EINES FAHRZEUGS**
SPRING STORAGE CONTROL DEVICE AND SPRING STORAGE CONTROL METHOD FOR VEHICLE BRAKING DEVICE
DISPOSITIF DE COMMANDE DE L'ACCUMULATEUR À RESSORT ET PROCÉDÉ DE COMMANDE DE L'ACCUMULATEUR À RESSORT POUR UN DISPOSITIF PERMETTANT DE FREINER UN VÉHICULE

(30) Priorität: 31.05.2021 DE 102021205513
(43) Veröffentlichungstag der Anmeldung: 07.12.2022
(73) Patentinhaber: Siemens Mobility GmbH, 81739 München (DE)
(72) Erfinder: Oberhofer, Matthias, 85221 Dachau (DE); Tutein, Doris Sibille, 80992 München (DE); Zippel, Volker, 91315 Höchstadt (DE)
(74) Vertreter: Siemens Patent Attorneys

(56) Entgegenhaltungen:
- EP-A1- 3 150 450
- DE-A1-102008 027 731

## Beschreibung

Es ist bekannt, dass ein Fahrzeug, beispielsweise ein Schienenfahrzeug, im abgestellten Zustand mittels Federspeicherbremsen festgehalten werden kann.

Bekannte Federspeicherbremsen weisen zumindest ein Reibbremsmittel mit Bremsbelag und einen über zumindest eine Hebelmechanik mit dem zumindest einem Reibbremsmittel wirkverbundenen Federspeicherbremsaktuator auf. Dabei umfasst der Federspeicherbremsaktuator einen Federspeicherbremszylinder, einen in dem Federspeicherbremszylinder beweglich geführten Federspeicherbremskolben und eine Federspeicherfeder. Im Fahrbetrieb des Fahrzeugs bildet Druckluft, welche über einen von einer Vorratsdrucklufteinrichtung gespeisten Strömungspfad auf den Federspeicherbremskolben des Federspeicherbremsaktuators wirkt, einen Federspeicherlösedruck. Der Federspeicherlösedruck erzeugt eine Gegenkraft zu der Federkraft der Federspeicherfeder, um die Federkraft zu kompensieren und damit die Federspeicherbremse zu lösen. Bei Erschöpfung des Druckluftvorrates der Vorratsdrucklufteinrichtung im abgestellten Zustand, beispielsweise aufgrund von Undichtigkeiten im Strömungspfad der Druckluft, aber auch im Falle eines Ausfalles des Federspeicherlösedruckes, beispielsweise aufgrund eines Schlauchrisses im Strömungspfad der Druckluft, wirkt die Federkraft des jeweiligen Federspeicherbremsaktuators automatisch.

Aus der Druckschrift EP 3 150 450 A1 ist ein Fahrzeugbremssystem bekannt. Dieses System weist Folgendes auf:
- eine Speiseleitung und eine Kontrollleitung,
- eine Bremssteuerungseinrichtung,
- einen Reservedruckbehälter, welcher über ein Rückschlagventil mit der Speiseleitung und über die Bremssteuerungseinrichtung mit zumindest einem Bremsaktuator verbunden ist, wobei der an den Bremsaktuator ausgegebene Druck vom Druck in der Kontrollleitung anhängig ist und
- eine Federspeichersteuereinrichtung mit Drucksteuerungsmitteln, welche bei normalem Betrieb des Fahrzeugs einen Federspeicherlösedruck in Abhängigkeit vom Druck in der Speiseleitung und auch in Abhängigkeit von einem fahrzeugbezogenen Geschwindigkeitssignal steuern.

Aus der Druckschrift DE 10 2008 027 731 A1 ist ein Steuergerät zur Steuerung einer Notlöseeinrichtung einer elektrischen Feststellbremse eines Fahrzeugs bekannt, bei dem die elektrischen Feststellbremse und die Notlöseeinrichtung über ein Wechselventil an zumindest einen Federspeicherbremszylinder gekoppelt sind und die Notlöseeinrichtung ein Notlöseventil und das Steuergerät umfasst.

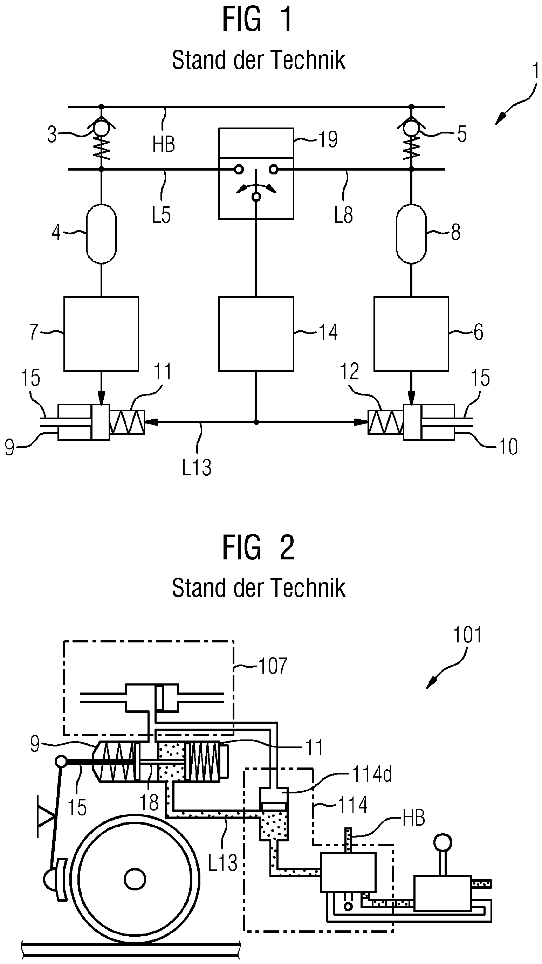

Aus der Druckschrift EP 2 303 657 B1 ist die hier in der Figur 1 gezeigte Vorrichtung 1 zum Bremsen eines Fahrzeugs bekannt, welche eine Federspeichersteuerungseinrichtung 14 in Form von Federspeichersteuerungsmitteln aufweist.

Diese bekannte Vorrichtung 1 umfasst eine Hauptluftbehälterleitung (Speiseleitung) HB, die mit einem figürlich nicht dargestellten Druckluftgenerator verbunden ist, welcher Druckluft mit einem Druck von 10 bar bereitstellt. Die Hauptluftbehälterleitung (Speiseleitung) HB ist über Rückschlagventile 3, 5 mit Reservedruckluftbehältern 4 und 6 verbunden. Der Reservedruckluftbehälter 4 ist über eine Bremssteuerungseinrichtung 7 mit einem pneumatischen Bremsaktuator 9 verbunden und der Reservedruckluftbehälter 6 ist über eine Bremssteuerungseinrichtung 8 mit einem pneumatischen Bremsaktuator 10 verbunden. Die pneumatischen Bremsaktuatoren 9, 10 sind jeweils als einfache Bremszylinder mit Bremskolben ausgebildet, bei denen jeweils eine mit Druck beaufschlagte Bremskammer von dem jeweiligen beweglich geführten Bremskolben begrenzt ist. Der Bremskolben des Bremsaktuators 9 ist über eine Kolbenstange 15 mit einer Hebelmechanik verbunden, in deren Zuge die Bewegung und Kraft des Bremskolbens des Bremsaktuators 9 in ein figürlich nicht dargestelltes Reibbremsmittel mit Bremsbelag eingeleitet wird. In gleicher Weise ist der Bremskolben des Bremsaktuators 10 über eine weitere Kolbenstange 15 mit einer weiteren Hebelmechanik verbunden, in deren Zuge die Bewegung und Kraft des Bremskolbens des Bremsaktuators 10 in ein figürlich nicht dargestelltes weiteres Reibbremsmittel mit Bremsbelag eingeleitet wird. Dadurch wird der Bremsbelag des jeweiligen Reibbremsmittels unter Reibschluss auf ein jeweiliges Bewegteil des Schienenfahrzeugs gepresst, wodurch es zu einer negativen Verzögerung des Fahrzeugs kommt. Als Bewegteile kommen beispielsweise die Räder oder Bremsscheiben des Schienenfahrzeugs in Betracht.

In Figur 1 sind ferner Federspeicherbremsaktuatoren 11 und 12 erkennbar, deren Federspeicherbremszylinder über eine gemeinsame pneumatische Verbindungsleitung L13 mit der Federspeichersteuerungseinrichtung 14 verbunden sind. Die Federspeichersteuerungseinrichtung 14 ist mit dem Ausgang einer Minimaldruckauswahleinheit 19 verbunden, die eingangsseitig über pneumatische Verbindungsleitungen L5 und L8 mit den Reservedruckluftbehältern 4 und 6 verbunden ist.

Der pneumatische Bremsaktuator 9 und der Federspeicherbremsaktuator 11 wirken über ihre jeweilige Kolbenstange beide auf die gleiche Hebelmechanik ein. Entsprechend wirken der pneumatische Bremsaktuator 10 und der Federspeicherbremsaktuator 12 auf die gleiche weitere Hebelmechanik ein. Die Hebelmechanik und das Reibbremsmittel mit Bremsbelag sind also sowohl Teil einer pneumatischen Bremse als auch Teil einer Federspeicherbremse des Fahrzeugs.

Ist der Druck im Reservedruckluftbehälter 6 geringer als der Druck im Reservedruckluftbehälter 4, stellt die Minimaldruckauswahleinheit 19 eine Verbindung zwischen dem Reservedruckluftbehälter 6 und dem Federspeichersteuerungseinrichtung 14 her. Eine Verbindung zwischen dem Reservedruckluftbehälter 4 und der Federspeichersteuerungseinrichtung 14 wird hergestellt, wenn der Druck im Reservedruckluftbehälter 4 geringer ist als derjenigen im Reservedruckluftbehälter 6. Ist daher der Druck in einem der Reservedruckluftbehälter 4 beziehungsweise 6 aufgrund einer Leckage gleich null, so dass der damit wirkverbundene pneumatische Bremsaktuator 9 beziehungsweise 10 nicht wirken kann, so steht für die Federspeicherbremsaktuatoren 11 und 12 keine Druckluft zur Verfügung, so dass die Federspeicherbremsen ihrerseits nicht mehr gelöst werden können. Ein Totalausfall der Vorrichtung zum Bremsen des Fahrzeugs ist auf diese Weise vermieden.

Darüber hinaus ist aus dem DB-Fachbuch "Schienenfahrzeugtechnik", 2. überarbeitete und erweiterte Auflage, 2008, Bahn Fachverlag Heidelberg ● Mainz, ISBN: 978-3-9808002-5-9, Seiten 343 und 344 (Kapitel 5.7.5) eine Vorrichtung zum Bremsen eines Fahrzeugs mit einer Federspeichersteuerungseinrichtung bekannt, bei welcher die Federspeichersteuerungseinrichtung ein Drucksteuerungsmittel aufweist, welches eingerichtet ist, einen Schleppbetrieb-Federspeicherlösedruck für zumindest einen Federspeicherbremsaktuator einer Federspeicherbremse des Fahrzeugs in Abhängigkeit vom Druck in einer Hauptluftleitung des Fahrzeugs zu steuern.

Die Figur 2 zeigt einen Ausschnitt einer Vorrichtung 101 zum Bremsen eines Fahrzeugs mit einer pneumatischen Bremse und mit einer Federspeicherbremse, welcher im Wesentlichen der Abbildung 417 aus dem genannten Kapitel 5.7.5 des DB-Fachbuches entspricht. In der Figur 2 sind zum besseren Verständnis eine Bremssteuerungseinrichtung 107 und eine Federspeichersteuerungseinrichtung 114 durch - in die bekannte Abbildung 417 des DB-Fachbuches zusätzlich eingefügte Rahmen kenntlich gemacht. Außerdem sind zum besseren Verständnis analog zu Figur 1 ein pneumatischer Bremsaktuator der pneumatischen Bremse des Fahrzeugs mit dem Bezugszeichen 9, ein Federspeicherbremsaktuator der Federspeicherbremse des Fahrzeugs mit dem Bezugszeichen 11, eine Kolbenstange des pneumatischen Bremsaktuators mit dem Bezugszeichen 15, eine Kolbenstange des Federspeicherbremsaktuators mit dem Bezugszeichen 18, eine Hauptluftbehälterleitung (Speiseleitung) mit dem Bezugszeichen HB und eine pneumatische Verbindungsleitung, über welche der Federspeicherbremszylinder des Federspeicherbremsaktuators 11 mit der Federspeichersteuerungseinrichtung 114 verbunden ist, mit dem Bezugszeichen L13 gekennzeichnet. Mit dem Bezugszeichen 114d ist außerdem ein Überlagerungsschutzmittel der Federspeichersteuerungseinrichtung 114 bezeichnet.

Unter dem genannten Kapitel 5.7.5 des DB-Fachbuches, ist ein Abschnitt einer Hauptluftleitungsdruck-gesteuerten Federspeicherbremse gewidmet, in welchem darauf hingewiesen ist, dass bei einigen Fahrzeugen im abgerüsteten Zustand die Federspeicherbremse mit Hauptluftleitungsdruck gesteuert wird und hier der Druckanstieg in der Hauptluftleitung (HL) automatisch zum Lösen der Federspeicherbremse führt.

Aufgrund der bekannten pneumatischen Steuerung der Federspeicherbremse in Abhängigkeit vom Druck in der Hauptluftleitung (HL) kann das Fahrzeug einfach rangiert werden. Diese vom Druck in der Hauptluftleitung (HL) abhängige Steuerung - hier auch als HL-Druck-abhängige Steuerung der Federspeicherbremse bezeichnet - ist in der Praxis so eingerichtet, dass die Federspeicherbremse bei ausgeschaltetem Fahrzeug (z.B. bei einer ausgeschalteten Lokomotive) angelegt wird, wenn kein Druck in der Hauptluftleitung (HL) vorliegt. Beim Füllen der Hauptluftleitung (HL) mit Luftdruck wird die pneumatische Bremse aktiviert und die Federspeicherbremse gelöst. Das Fahrzeug kann dann mit gelöster Federspeicherbremse als Wagen geschleppt werden.

Es ist an sich vorteilhaft, beim Schleppen des Fahrzeugs einen pneumatischen Gleitschutz zu aktivieren, um dessen Funktion zur Vermeidung von Radflachstellen zu gewährleisten.

Nachteilig ist dabei jedoch, dass im Falle einer Schnellbremsung der Druck in der Hauptluftleitung (HL) vollständig entweicht und damit die vom Druck in der Hauptluftleitung gesteuerte Federspeicherbremse angelegt wird. Der pneumatische Gleitschutz kann in diesem Fall die Bremskraft der Federspeicherbremse nicht oder zumindest nicht optimal beeinflussen und dadurch nicht optimal arbeiten, wenn das Überlagerungsschutzmittel 114d dem Gleitschutz nachgelagert ist.

Ausgehend hiervon liegt der Erfindung die Aufgabe zu Grunde, den Betrieb des Fahrzeugs bei einem Schleppvorgang zu verbessern.

Gelöst wird diese Aufgabe mit einer erfindungsgemäßen Vorrichtung zum Bremsen eines Fahrzeugs nach Anspruch 1.

Gelöst wird diese Aufgabe auch mit einem erfindungsgemäßem Federspeichersteuerungsverfahren nach Anspruch 10.

Erfindungsgemäß ist also zusätzlich zu der HL-Druck-abhängigen Steuerung des Schleppbetrieb-Federspeicherlösedrucks eine geschwindigkeitsabhängige Steuerung des Schleppbetrieb-Federspeicherlösedrucks vorgesehen. Damit ist die Federspeicherbremse also HL-Druck-abhängig und geschwindigkeitsabhängig steuerbar.

Als fahrzeugbezogenes Geschwindigkeitssignal soll im Rahmen der Erfindung insbesondere ein Signal verstanden werden, dass sich auf die aktuelle Geschwindigkeit eines Rades oder mehrerer Räder des Fahrzeugs, auf die aktuelle Geschwindigkeit eines oder mehrerer Drehgestelle oder eines oder mehrerer Wagen des Fahrzeugs oder auf die aktuelle Geschwindigkeit des Fahrzeugs als Ganzes bezieht. Das fahrzeugbezogene Geschwindigkeitssignal entspricht dabei dem aktuellen Wert einer fahrzeugbezogenen Geschwindigkeit oder dem aktuellen Wert einer anderen physikalischen Größe, welche die fahrzeugbezogene Geschwindigkeit repräsentiert; aus welcher also die fahrzeugbezogene Geschwindigkeit herleitbar ist. Eine derartige physikalischen Größe ist insbesondere die Drehzahl. Das fahrzeugbezogene Geschwindigkeitssignal kann also beispielsweise den aktuellen Wert der Geschwindigkeit eines Rades des Fahrzeugs oder den aktuellen Wert der Drehzahl eines Rades des Fahrzeugs angeben. Als bevorzugte Alternative kann das fahrzeugbezogene Geschwindigkeitssignal beispielsweise den aktuellen Mittelwert der Geschwindigkeiten mehrerer Räder des Fahrzeugs oder den aktuellen Mittelwert der Drehzahlen mehrerer Räder des Fahrzeugs angeben.

Vorteilhafte Ausgestaltungen der erfindungsgemäßen Federspeichersteuerungseinrichtung sind in den Unteransprüchen 2 bis 8 angegeben. Außerdem sind vorteilhafte Ausgestaltungen des erfindungsgemäßen Federspeichersteuerungsverfahren in den Unteransprüchen 11 bis 17 angegeben.

Durch die erfindungsgemäßen Federspeichersteuerungseinrichtung und das erfindungsgemäße Federspeichersteuerungsverfahren ist in technisch vorteilhafter Weise eine Möglichkeit geschaffen, bei Schnellbremsungen im Schleppbetrieb des Fahrzeugs ein automatisches Anlegen der Federspeicherbremse aufgrund der HL-Druck-abhängigen Steuerung des Schleppbetrieb-Federspeicherlösedrucks durch die zusätzliche geschwindigkeitsabhängige Steuerung des Schleppbetrieb-Federspeicherlösedrucks zu verhindern.

Nach einem Aspekt der Erfindung wird es vorrichtungsgemäß als vorteilhaft angesehen, wenn das Drucksteuerungsmittel eingerichtet ist, einen Vorratsdruck einer Vorratsdrucklufteinrichtung unabhängig von dem Druck in der Hauptluftleitung als den Schleppbetrieb-Federspeicherlösedruck auszugeben, wenn ein vom fahrzeugbezogenen Geschwindigkeitssignal angegebener Wert einen vorgegebenen Grenzwert übersteigt.

Entsprechend wird es verfahrensgemäß als vorteilhaft angesehen, wenn das Drucksteuerungsmittel einen Vorratsdruck einer Vorratsdrucklufteinrichtung unabhängig von dem Druck in der Hauptluftleitung als den Schleppbetrieb-Federspeicherlösedruck ausgibt, wenn ein vom fahrzeugbezogenen Geschwindigkeitssignal angegebener Wert einen vorgegebenen Grenzwert übersteigt.

Hierdurch kann der technische Vorteil erreicht werden, dass - unter der Voraussetzung, dass ausreichend Vorratsdruck verfügbar ist - das automatische Anlegen der Federspeicherbremse bei Schnellbremsungen verhindert ist bzw. wird, solange der Wert, den das fahrzeugbezogene Geschwindigkeitssignal angibt, den vorgegebenen Grenzwert übersteigt.

Vorzugsweise wird der Grenzwert derart vorgegeben, dass das automatische Anlegen der Federspeicherbremse bei Schnellbremsungen verhindert ist bzw. wird, solange sich das Fahrzeug noch in Bewegung befindet.

Vorrichtungsgemäß wird als vorteilhaft angesehen,
- wenn für die von dem fahrzeugbezogenen Geschwindigkeitssignal abhängige Steuerung des Schleppbetrieb-Federspeicherlösedrucks eine zusätzliche Steuereinrichtung des Drucksteuerungsmittels eingerichtet ist, einen zweiten Abschnitt des Schleppbetrieb-Druckluftpfades in Abhängigkeit des fahrzeugbezogenen Geschwindigkeitssignals entweder mit dem ersten Abschnitt des Schleppbetrieb-Druckluftpfades oder mit einem von der Vorratsdrucklufteinrichtung gespeisten zusätzlichen Versorgungspfad zu verbinden.

Entsprechend wird es verfahrensgemäß als vorteilhaft angesehen,
- wenn für die von dem fahrzeugbezogenen Geschwindigkeitssignal abhängige Steuerung des Schleppbetrieb-Federspeicherlösedrucks eine zusätzliche Steuereinrichtung des Drucksteuerungsmittels einen zweiten Abschnitt des Schleppbetrieb-Druckluftpfades in Abhängigkeit des fahrzeugbezogenen Geschwindigkeitssignals entweder mit dem ersten Abschnitt oder mit einem von der Vorratsdrucklufteinrichtung gespeisten zusätzlichen Versorgungspfad verbindet.

Vorzugsweise weist die erfindungsgemäße Federspeichersteuerungseinrichtung nach einem weiteren Aspekt der Erfindung ein weiteres Drucksteuerungsmittel auf, welches eingerichtet ist, einen Aktivbetrieb-Federspeicherlösedruck in Abhängigkeit von einer, insbesondere automatisch und/oder manuell bereitgestellten, Federspeicherbremsanforderung zu steuern,
wobei für die von der Federspeicherbremsanforderung abhängige Steuerung des Aktivbetrieb-Federspeicherlösedrucks eine weitere Steuereinrichtung eingerichtet ist, einen Aktivbetrieb-Druckluftpfad in Abhängigkeit der Federspeicherbremsanforderung entweder mit einem von der Vorratsdrucklufteinrichtung gespeisten weiteren Versorgungspfad oder mit einem weiteren Auslass ins Freie zu verbinden.

Entsprechend wird es verfahrensgemäß als vorteilhaft angesehen, wenn ein weiteres Drucksteuerungsmittel einen Aktivbetrieb-Federspeicherlösedruck in Abhängigkeit von einer, insbesondere automatisch und/oder manuell bereitgestellten, Federspeicherbremsanforderung steuert,
wobei für die von der Federspeicherbremsanforderung abhängige Steuerung des Aktivbetrieb-Federspeicherlösedrucks eine weitere Steuereinrichtung einen Aktivbetrieb-Druckluftpfad in Abhängigkeit der Federspeicherbremsanforderung entweder mit einem von der Vorratsdrucklufteinrichtung gespeisten weiteren Versorgungspfad oder mit einem weiteren Auslass ins Freie verbindet.

Des Weiteren weist die erfindungsgemäße Federspeichersteuerungseinrichtung nach einem weiteren Aspekt der Erfindung ein Betriebsmodus-Umschaltmittel auf, welches eingerichtet ist,
- in Abhängigkeit einer Umschaltanforderung zwischen dem Schleppbetrieb-Modus und einem Aktivbetrieb-Modus umzuschalten,
- im Schleppbetrieb-Modus den Schleppbetrieb-Federspeicherlösedruck als einen Federspeicherlösedruck auszugeben und
- im Aktivbetrieb-Modus den Aktivbetrieb-Federspeicherlösedruck als den Federspeicherlösedruck auszugeben.

Entsprechend wird es verfahrensgemäß als vorteilhaft angesehen, wenn ein Betriebsmodus-Umschaltmittel
- in Abhängigkeit einer Umschaltanforderung zwischen dem Schleppbetrieb-Modus und einem Aktivbetrieb-Modus umschaltet,
- im Schleppbetrieb-Modus den Schleppbetrieb-Federspeicherlösedruck als einen Federspeicherlösedruck ausgibt und
- im Aktivbetrieb-Modus den Aktivbetrieb-Federspeicherlösedruck als den Federspeicherlösedruck ausgibt.

Im Stillstand des Fahrzeugs wird die Federspeicherbremse (z.B. bei einer Bremsprobe) zum Festhalten des Fahrzeugs verwendet. Der Federspeicherlösedruck wird zu 0 bar reduziert und die Federkraft der Federspeicherfeder wirkt. Zusätzlich kann eine pneumatische Bremse, welche auf das gleiche Reibbremsmittel wie die Federspeicherbremse wirkt, angelegt sein.

Um zu verhindern, dass sich die Federkraft der Federspeicherfeder und die pneumatische Bremskraft der pneumatischen Bremse addieren, wird es als vorteilhaft angesehen, wenn die erfindungsgemäße Federspeichersteuerungseinrichtung nach einem weiteren Aspekt der Erfindung ein Überlagerungsschutzmittel mit
- einem ersten Anschluss, welcher mit dem Federspeicherlösedruck beaufschlagt ist,
- einem zweiten Anschluss, welcher mit einem Überlagerungsschutzdruck beaufschlagt ist und
- einem dritten Anschluss, welcher druckluftleitend mit einem Federspeicherbremszylinder des Federspeicherbremsaktuators verbunden ist, aufweist
- wobei das Überlagerungsschutzmittel eingerichtet ist, aus dem Federspeicherlösedruck und dem Überlagerungsschutzdruck einen modifizierten, vor Bremskraftüberlagerung schützenden Federspeicherlösedruck zu bilden und an ihrem dritten Anschluss auszugeben.

Entsprechend wird es verfahrensgemäß als vorteilhaft angesehen, wenn
- ein erster Anschluss eines Überlagerungsschutzmittels mit dem Federspeicherlösedruck beaufschlagt wird und
- ein zweiter Anschluss des Überlagerungsschutzmittels mit einem Überlagerungsschutzdruck beaufschlagt wird,
- wobei das Überlagerungsschutzmittel aus dem Federspeicherlösedruck und dem Überlagerungsschutzdruck einen modifizierten, vor Bremskraftüberlagerung schützenden Federspeicherlösedruck bildet und an einem dritten Anschluss des Überlagerungsschutzmittels, welcher druckluftleitend mit einem Federspeicherbremszylinder des Federspeicherbremsaktuators verbunden ist, ausgibt.

Hierdurch kann die wirksame Federkraft der Federspeicherfeder verringert werden. Die resultierende Gesamtkraft wird begrenzt. Entsprechend begrenzt ist die mechanische Belastung der Hebelmechanik und des Reibbremsmittels. Außerdem wird das Risiko für ein mögliches Blockieren eines Rades oder Radsatzes verringert.

Das Überlagerungsschutzmittel kann zentral im oder am Wagenkasten des Fahrzeugs oder lokal am Fahrwerk des Fahrzeugs angeordnet sein. Da es vorteilhaft ist, druckluftleitende Verbindungen im Bereich des Überganges vom Wagenkasten zum Fahrwerk als Schlauch auszubilden, hat die lokale Anordnung des Überlagerungsschutzmittels den Vorteil, dass die Wirksamkeit des Überlagerungsschutzes auch bei einem Riss des den Federspeicherlösedruck führenden Schlauches gewährleistet ist.

Ferner wird es vorrichtungsgemäß als vorteilhaft angesehen,
- wenn ein von einer Bremssteuereinheit ausgesteuerter pneumatischer Bremsdruck als der Überlagerungsschutzdruck bereitgestellt ist oder
- wenn alternativ ein von einer der Bremssteuereinheit nachgeordneten Gleitschutzregelungseinheit geregelter pneumatischer Bremsdruck als der Überlagerungsschutzdruck bereitgestellt ist.

Entsprechend wird es verfahrensgemäß als vorteilhaft angesehen,
- wenn ein von einer Bremssteuereinheit ausgesteuerter pneumatischer Bremsdruck als der Überlagerungsschutzdruck bereitgestellt wird oder
- wenn alternativ ein von einer der Bremssteuereinheit nachgeordneten Gleitschutzregelungseinheit geregelter pneumatischer Bremsdruck als der Überlagerungsschutzdruck bereitgestellt wird.

Anstelle des genannten Überlagerungsschutzmittels, welches einen pneumatisch wirkenden Überlagerungsschutz bildet, kann auch ein Überlagerungsschutz vorgesehen sein, welcher die aus der wirksamen Federkraft der Federspeicherfeder und der Kraft des Bremskolbens des Bremsaktuators resultierende Gesamtkraft (Summenkraft) auf mechanische Weise auf einen Maximalwert begrenzt. Es kann also - mit anderen Worten ausgedrückt - anstelle des pneumatisch wirkenden Überlagerungsschutzes ein mechanisch wirkender Überlagerungsschutz, insbesondere ein rein mechanisch wirkender Überlagerungsschutz vorgesehen sein.

Außerdem ist gemäß einer weiteren bevorzugten Ausführungsform der erfindungsgemäßen Federspeichersteuerungseinrichtung vorgesehen,
- dass bei in den Schleppbetrieb-Modus umgeschalteten Betriebsmodus-Umschaltmittel ein erster Anschluss und ein dritter Anschluss des Betriebsmodus-Umschaltmittels druckluftleitend verbunden sind und
- dass bei in den Aktivbetrieb-Modus umgeschalteten Betriebsmodus-Umschaltmittel ein zweiter Anschluss und der dritte Anschluss des Betriebsmodus-Umschaltmittels druckluftleitend verbunden sind,
- wobei der erste Anschluss des Betriebsmodus-Umschaltmittels mit dem zweiten Abschnitt des Schleppbetrieb-Druckluftpfades druckluftleitend verbunden ist,
- wobei der zweite Anschluss des Betriebsmodus-Umschaltmittels mit dem Aktivbetrieb-Druckluftpfad druckluftleitend verbunden ist und
- wobei der dritte Anschluss des Betriebsmodus-Umschaltmittels mit dem ersten Anschluss des Überlagerungsschutzmittels druckluftleitend verbunden ist.

Und entsprechend ist gemäß einer bevorzugten Ausführungsform des erfindungsgemäßen Federspeichersteuerungsverfahrens vorgesehen,
- dass beim Umschalten des Betriebsmodus-Umschaltmittels in den Schleppbetrieb-Modus ein erster Anschluss und ein dritter Anschluss des Betriebsmodus-Umschaltmittels druckluftleitend verbunden werden und
- dass beim Umschalten des Betriebsmodus-Umschaltmittels in den Aktivbetrieb-Modus ein zweiter Anschluss und der dritte Anschluss des Betriebsmodus-Umschaltmittels druckluftleitend verbunden werden,
- wobei der erste Anschluss des Betriebsmodus-Umschaltmittels mit dem zweiten Abschnitt des Schleppbetrieb-Druckluftpfades druckluftleitend verbunden ist,
- wobei der zweite Anschluss des Betriebsmodus-Umschaltmittels mit dem Aktivbetrieb-Druckluftpfad druckluftleitend verbunden ist und
- wobei der dritte Anschluss des Betriebsmodus-Umschaltmittels mit dem ersten Anschluss des Überlagerungsschutzmittels druckluftleitend verbunden ist.

Die Erfindung betrifft auch ein Fahrzeug, insbesondere Schienenfahrzeug, mit einer derartigen Vorrichtung zum Bremsen des Fahrzeugs.

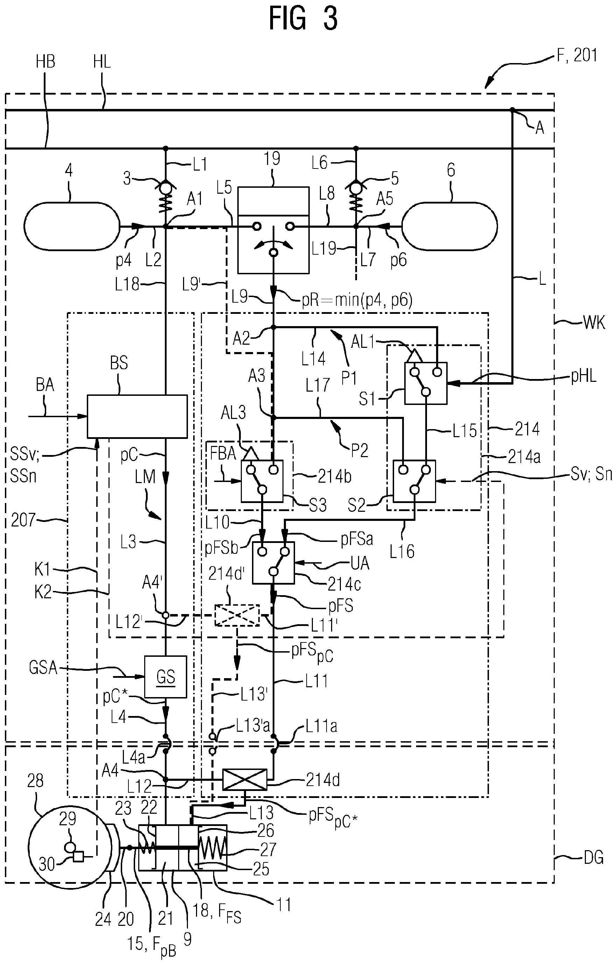

Im Weiteren wird die Erfindung anhand der Figur 3 näher erläutert.

Die Figur 3 zeigt schematisch einen Ausschnitt eines Fahrzeugs F mit einer erfindungsgemäßen Vorrichtung 201 zum Bremsen des Fahrzeugs F. Das Fahrzeug F ist ein Schienenfahrzeug. Gezeigt ist ein Wagenkasten WK und ein den Wagenkasten WK tragendes Drehgestell DG des Fahrzeugs F.

Bei der erfindungsgemäßen Vorrichtung 201 sind eine Hauptluftbehälterleitung (Speiseleitung) HB und eine Hauptluftleitung HL, welche sich beide durch alle Wagen des Fahrzeugs F erstrecken, Bestandteile einer pneumatischen Leitungsmatrix LM.

Die Hauptluftbehälterleitung (Speiseleitung) HB ist mit einem figürlich nicht dargestellten Druckluftgenerator verbunden, welcher Druckluft mit einem Druck von 10 bar bereitstellt. Die Hauptluftbehälterleitung HB ist über Rückschlagventile 3, 5 mit Reservedruckluftbehältern 4 und 6 verbunden.

Zu der pneumatischen Leitungsmatrix LM gehören neben der Hauptluftbehälterleitung (Speiseleitung) HB und der Hauptluftleitung HL auch die gezeigten pneumatischen Verbindungsleitungen L, L1-L8, L9 bzw. L9', L10, L11-L13 bzw. L11'-L13' und L14-L19 sowie Abzweigstellen A, A1-A3, A4 bzw. A4' und A5.

Der Reservedruckluftbehälter 4 ist über eine Bremssteuerungseinrichtung 207 (Bremssteuerungsmitteln) mit zumindest einem Bremsaktuator 9 verbunden. Er kann über die Bremssteuerungseinrichtung 207 mit einem oder mehreren weiteren Bremsaktuatoren verbunden sein.

Der Reservedruckluftbehälter 6 kann in gleicher Weise wie der Reservedruckluftbehälter 4 über eine hier nicht gezeigte entsprechende weitere Bremssteuerungseinrichtung (weiteren Bremssteuerungsmitteln) mit einem entsprechenden weiteren Bremsaktuator oder mehreren entsprechenden weiteren Bremsaktuatoren verbunden sein.

Die Bremssteuerungseinrichtung 207 kann also in bekannter Weise nicht nur mit dem gezeigten Bremsaktuator 9 sondern mit einem oder mehreren weiteren pneumatischen Bremsaktuatoren verbunden sein. Und die nicht gezeigte andere Bremssteuerungseinrichtung kann ebenfalls mit einem oder mehreren anderen Bremsaktuatoren verbunden sein.

Die Bremssteuerungseinrichtung 207 umfasst eine Bremssteuereinheit BS, mit einem Steuereingang für eine Bremsanforderung BA, und eine Gleitschutzregelungseinheit GS mit nicht gezeigten Gleitschutzventilen und mit einem Regelsignaleingang für eine Gleitschutzregelungsanforderung GSA zum Gleitschutz des Fahrzeugs.

Ein erster Anschluss der Bremssteuereinheit BS ist über die Verbindungsleitungen L2 und L18 mit dem Reservedruckluftbehälter 4 verbunden.

Der Reservedruckluftbehälter 6 ist über die Verbindungsleitungen L7 und L19 mit einer hier nicht gezeigten anderen Bremssteuereinheit der nicht gezeigten anderen Bremssteuerungseinrichtung verbunden.

Ein zweiter Anschluss der Bremssteuereinheit BS ist über die Verbindungsleitung L3 mit einem ersten Anschluss der Gleitschutzregelungseinheit GS verbunden.

Und ein zweiter Anschluss der Gleitschutzregelungseinheit GS ist über die Verbindungsleitung L4 mit einem Anschluss eines Bremszylinders 21 des pneumatischen Bremsaktuators 9 verbunden.

Die Verbindungsleitung L4 weist im Bereich des Überganges vom Wagenkasten WK zum Drehgestell DG einen als Schlauch ausgebildeten Abschnitt L4a auf.

Die Bremssteuereinheit BS steuert in Abhängigkeit von der Bremsanforderung BA einen pneumatischen Bremsdruck pC aus. Die der Bremssteuereinheit BS nachgeordneten Gleitschutzregelungseinheit GS regelt den pneumatischen Bremsdruck pC derart, dass ein unerwünschtes Schleudern oder Gleiten des Fahrzeugs vermieden wird. Die Gleitschutzregelungseinheit GS sorgt also dafür, dass ein in dem Bremszylinder 21 beweglich geführter Bremskolben 22 des pneumatischen Bremsaktuators 9 mit einem zum Gleitschutz geregelten pneumatischen Bremsdruck pC* beaufschlagt ist.

Der gezeigte pneumatische Bremsaktuator 9 weist neben dem Bremszylinder 21 und dem Bremskolben 22 eine Rückholfeder 23 und eine Kolbenstange 15 auf. Der Bremskolben 22 des Bremsaktuators 9 ist über die Kolbenstange 15 mit einer Hebelmechanik 20 verbunden, in deren Zuge die Bewegung und Kraft des Bremskolbens 22 - im Weiteren auch als pneumatische Bremskraft F_{pB} bezeichnet - in Reibbremsmittel 24 mit Bremsbelag eingeleitet wird. Auf den Bremskolben 22 wirkt die Kraft der Rückholfeder 23 entgegen der Kraft des eingeleiteten geregelten pneumatischen Bremsdrucks pC*.

Der Bremsbelag der Reibbremsmittel 24 wird unter Reibschluss auf ein Bewegteil 28 des Fahrzeugs F gepresst, wodurch es zu einer negativen Verzögerung des Fahrzeugs F kommt. Als Bewegteil 28 kommt beispielsweise ein Rad oder eine Bremsscheibe des Fahrzeugs F in Betracht.

In der Figur 3 ist ferner ein Federspeicherbremsaktuator 11 mit einem Federspeicherbremszylinder 25 erkennbar, wobei ein Anschluss des Federspeicherbremszylinders 25 über die Verbindungsleitung L13 der pneumatischen Leitungsmatrix LM mit einer Federspeichersteuerungseinrichtung 214 verbunden ist.

Der Federspeicherbremsaktuator 11 weist neben dem Federspeicherbremszylinder 25, einen Federspeicherbremskolben 26, eine Kolbenstange 18 und eine Federspeicherfeder 27 auf.

Der Federspeicherbremskolben 26 des Federspeicherbremsaktuators 11 ist über die Kolbenstange 18 in geeigneter Weise mit der Hebelmechanik 20 verbunden, in deren Zuge somit auch die Bewegung und Kraft des Federspeicherbremskolben 26 - im Weiteren auch als Federspeicherbremskraft F_{FS} bezeichnet - in die Reibbremsmittel 24 wird. Im gezeigten Ausführungsbeispiel wirkt die Bewegung und Kraft F_{pB} des Federspeicherbremskolben 26 über die Kolbenstange 18 auf den Bremskolben 22 und von dort über die Kolbenstange 15 auf die Hebelmechanik 20.

Der pneumatische Bremsaktuator 9 und der Federspeicherbremsaktuator 11 wirken also über ihre jeweilige Kolbenstange 15 bzw. 18 in geeigneter Weise beide auf die gleiche Hebelmechanik 20 und damit auf das gleiche Reibbremsmittel 24 ein.

Die Federspeichersteuerungseinrichtung 214 ist über die Verbindungsleitung L9 mit dem Ausgang einer Minimaldruckauswahleinheit 19 verbunden, die eingangsseitig über die Verbindungsleitungen L5, L2 und L8, L7 mit den Reservedruckluftbehältern 4 und 6 verbunden ist.

Hier bilden also die beiden Reservedruckluftbehälter 4 und 6 und die Minimaldruckauswahleinheit 19 eine der Federspeichersteuerungseinrichtung 214 zugeordnete Vorratsdrucklufteinrichtung, die einen Vorratsdruck pR=min(p4,p6) bereitstellt.

Ist der Druck im Reservedruckluftbehälter 6 geringer als der Druck im Reservedruckluftbehälter 4, stellt die Minimaldruckauswahleinheit 19 eine Verbindung zwischen dem Reservedruckluftbehälter 6 und der Federspeichersteuerungseinrichtung 214 her. Eine Verbindung zwischen Reservedruckluftbehälter 4 und der Federspeichersteuerungseinrichtung 214 wird hergestellt, wenn der Druck im Reservedruckluftbehälter 4 geringer ist als derjenigen im Reservedruckluftbehälter 6.

Alternativ kann vorgesehen sein, dass der Reservedruckluftbehälter 4 über die Verbindungsleitungen L9' ohne Zwischenschaltung der Minimaldruckauswahleinheit 19 direkt mit der Federspeichersteuerungseinrichtung 214 verbunden ist. Dann bildet der Reservedruckluftbehälter 4 eine der Federspeichersteuerungseinrichtung 214 zugeordnete Vorratsdrucklufteinrichtung.

Der Federspeicherbremsaktuator 11 lässt sich mit der Druckluft aus der Vorratsdrucklufteinrichtung 4,6,19; 4 daher nur solange vollständig lösen wie ausreichend Druck in der Vorratsdrucklufteinrichtung 4,6,; 4 vorhanden ist, um - wie nachfolgend noch beschrieben - einen Federspeicherlösedruck pFS bzw. einen modifizierten Federspeicherlösedruck pFS_{pC};pFS_{pC*} aufzubauen, welcher erforderlich ist, um die Kraft der Federspeicherfeder 27 zu überwinden.

Bildet der Reservedruckluftbehälter 4 die der Federspeichersteuerungseinrichtung 214 zugeordnete Vorratsdrucklufteinrichtung und ist der Druck in dem Reservedruckluftbehälter 4 aufgrund einer Leckage gleich null, so dass der pneumatische Bremsaktuator 9 ausfällt, so kann die Federspeicherbremse 11 nicht mehr gelöst werden. Ein Totalausfall des Abbremsens des Bewegteils 28 ist auf diese Weise sicher vermieden.

Die Federspeichersteuerungseinrichtung 214 umfasst Drucksteuermittel 214a mit einer Steuereinrichtung S1, die einen Steueranschluss aufweist, an dem der Druck pHL der Hauptluftleitung HL anliegt, und mit einer zusätzlichen Steuereinrichtung S2, die einen Steueranschluss zum Empfang eines fahrzeugbezogenen Geschwindigkeitssignals Sv;Sn aufweist.

Die Steuereinrichtung S1 weist außerdem einen ersten Anschluss auf, welcher mit der Verbindungsleitungen L14 verbunden ist, die am Abzweig A2 von der Verbindungsleitung L9 abzweigt. Sie weist weiterhin einen zu einem Auslass AL1 ins Freie führenden zweiten Anschluss auf. Und sie weist einen dritten Anschluss auf, welcher mit der Verbindungsleitungen L15 verbunden ist.

Die Steuereinrichtung S1 ist eine Umschaltung und dient im Schleppbetrieb des Fahrzeugs zu einem Umschalten zwischen zwei Schaltstellungen in Abhängigkeit vom Druck pHL in der Hauptluftleitung HL. Wenn das Fahrzeug (z.B. eine Lokomotive) ausgeschaltet ist, wird die Federspeicherbremse angelegt, wenn kein Druck in der Hauptluftleitung HL vorliegt, da die Steuereinrichtung S1 in die gezeigte eine der beiden Schaltstellung übergeht, wenn kein Druck in der Hauptluftleitung HL vorliegt. Denn dann ist der dritte Anschluss der Steuereinrichtung S1 mit dem zweiten Anschluss verbunden und über den Auslass AL1 erfolgt ein Entlüften ins Freie.

Die zusätzliche Steuereinrichtung S2 weist einen ersten Anschluss auf, welcher mit der Verbindungsleitungen L15 und über diese mit dem dritten Anschluss der Steuereinrichtung S1 verbunden ist. Sie weist weiterhin einen zweiten Anschluss auf, welcher mit der Verbindungsleitungen L17 verbunden ist, die am Abzweig A3 ebenfalls von der Verbindungsleitungen L9 abzweigt. Und sie weist einen dritten Anschluss auf, welcher mit der Verbindungsleitungen L16 verbunden ist.

Die zusätzliche Steuereinrichtung S2 ist ebenfalls eine Umschaltung und dient im Schleppbetrieb des Fahrzeugs zu einem Umschalten zwischen zwei Schaltstellungen in Abhängigkeit von dem fahrzeugbezogenen Geschwindigkeitssignal Sv;Sn.

Das fahrzeugbezogene Geschwindigkeitssignal Sv gibt dabei den Wert einer fahrzeugbezogenen Geschwindigkeit v an. Alternativ gibt das fahrzeugbezogene Geschwindigkeitssignal Sn den Wert einer die fahrzeugbezogene Geschwindigkeit v repräsentierenden Größe, beispielsweise einer Raddrehzahl n an.

Das fahrzeugbezogene Geschwindigkeitssignal Sv;Sn wird bei der in Figur 3 gezeigten Ausführungsform der erfindungsgemäßen Federspeichersteuerungseinrichtung 214 von der Bremssteuereinheit BS bereitgestellt, wobei die Bremssteuereinheit BS das fahrzeugbezogene Geschwindigkeitssignal Sv;Sn aus zumindest einem Sensorsignal SSv; SSn bildet. Das zumindest eine Sensorsignal SSv; SSn wird hier beispielhaft von einem der Radachse 29 des Rades 28 zugeordneten Sensor 30 bereitgestellt und über den Kommunikationspfad K1 an die Bremssteuereinheit BS übermittelt. Der Sensor ist beispielsweise ein Geschwindigkeitssensor, der die fahrzeugbezogene Geschwindigkeit v des auf der Radachse 29 angeordneten Radsatzes ermittelt, oder ein Drehzahlsensor, welche die Drehzahl n der Radachse 29 ermittelt. Über den Kommunikationspfad K2 gibt die Bremssteuereinheit BS das Sensorsignal SSv; SSn als das fahrzeugbezogene Geschwindigkeitssignal Sv; Sn an die zusätzliche Steuereinrichtung S2 aus. Alternativ bestimmt die Bremssteuereinheit BS das fahrzeugbezogene Geschwindigkeitssignal Sv; Sn aus mehreren Sensorsignalen von Sensoren, welche mehreren Radsätzen bzw. Radachsen zugeordnet sind, oder auch aus anderen Quellen, die eine Geschwindigkeit eines Rades, einer Radachse oder eines Wagens des Fahrzeugs oder die Geschwindigkeit des Fahrzeuges als Ganzes angeben.

Bei der gezeigten Ausführungsform der Federspeichersteuerungseinrichtung 214 ist vorgesehen, dass die zusätzliche Steuereinrichtung S2 die gezeigte eine ihrer beiden Schaltstellungen einnimmt, wenn das Fahrzeug steht. Die zusätzliche Steuereinrichtung S2 ist eingerichtet, von der gezeigten einen Schaltstellung in ihre andere Schaltstellung umzuschalten, bei der ihr zweiter Anschluss mit ihrem dritten Anschluss verbunden ist, sobald sich das Fahrzeug F in Bewegung befindet.

Bei der erfindungsgemäßen Federspeichersteuerungseinrichtung 214 der Vorrichtung 201 zum Bremsen des Fahrzeugs F, ist also das Drucksteuerungsmittel 214a eingerichtet, einen Schleppbetrieb-Federspeicherlösedruck pFSa für den zumindest einen Federspeicherbremsaktuator 11 in Abhängigkeit vom Druck pHL in der Hauptluftleitung HL des Fahrzeugs F zu steuern. Und dieses Drucksteuerungsmittel 214a ist erfindungsgemäß eingerichtet, den Schleppbetrieb-Federspeicherlösedruck pFSa auch in Abhängigkeit von dem fahrzeugbezogenen Geschwindigkeitssignal Sv; Sn zu steuern.

Insbesondere ist das Drucksteuerungsmittel 214a eingerichtet, einen Vorratsdruck p4;pR - mit p4 ist der Vorratsdruck des Reservedruckbehälters 4 bezeichnet und mit pR=min(p4,p6) ist der von der Minimaldruckauswahleinheit 19 bereitgestellte Druck bezeichnet - einer Vorratsdrucklufteinrichtung 4; 4,6,19 unabhängig von dem Druck pHL in der Hauptluftleitung HL als den Schleppbetrieb-Federspeicherlösedruck pFSa auszugeben, wenn der vom fahrzeugbezogenen Geschwindigkeitssignal Sv; Sn angegebener Wert einen vorgegebenen Grenzwert übersteigt.

Bei der gezeigten Ausführungsform ist in vorteilhafter Weise null als Grenzwert vorgegeben. Der Grenzwert liegt also in vorteilhafter Weise bei 0 km/h, wenn das fahrzeugbezogene Geschwindigkeitssignal Sv den Wert einer fahrzeugbezogenen Geschwindigkeit v angibt.

Oder der Grenzwert liegt in vorteilhafter Weise bei 0 Umdrehungen pro Sekunde oder alternativ 0 Umdrehungen pro Minute, wenn das fahrzeugbezogene Geschwindigkeitssignal Sn den Wert der Raddrehzahl n angibt.

Für die vom Druck pHL in der Hauptluftleitung HL des Fahrzeugs F abhängige Steuerung des Schleppbetrieb-Federspeicherlösedrucks pFSa ist die Steuereinrichtung S1 des Drucksteuerungsmittels 214a also eingerichtet, den ersten Abschnitt L15 eines Schleppbetrieb-Druckluftpfades - hier gebildet von den Verbindungsleitungen L15 und L16 - in Abhängigkeit des Druckes pHL in der Hauptluftleitung HL entweder mit dem von der Vorratsdrucklufteinrichtung 4; 4,6,19 gespeisten Versorgungspfad L14 oder mit dem Auslass AL1 ins Freie zu verbinden.

Und für die von dem fahrzeugbezogene Geschwindigkeitssignal Sv; Sn abhängige Steuerung des Schleppbetrieb-Federspeicherlösedrucks pFSa ist die zusätzliche Steuereinrichtung S2 des Drucksteuerungsmittels 214a demnach eingerichtet, einen zweiten Abschnitt L16 des Schleppbetrieb-Druckluftpfades L15, L16 in Abhängigkeit des fahrzeugbezogenen Geschwindigkeitssignals Sv; Sn entweder mit dem ersten Abschnitt L15 des Schleppbetrieb-Druckluftpfades L15, L16 oder mit einem von der Vorratsdrucklufteinrichtung 4;4,6,19 gespeisten zusätzlichen Versorgungspfad L17 zu verbinden.

Die Federspeichersteuerungseinrichtung 214 umfasst außerdem ein weiteres Drucksteuermittel 214b mit einer weiteren Steuereinrichtung S3 und einem weiteren Auslass A3 ins Freie.

Die weitere Steuereinrichtung S3 weist einen ersten Anschluss auf, welcher mit der Verbindungsleitungen L9 verbunden ist. Sie weist einen zu dem weiteren Auslass AL3 ins Freie führenden zweiten Anschluss auf. Und sie weist einen dritten Anschluss auf, welcher mit der Verbindungsleitungen L10 verbunden ist.

Auch die weitere Steuereinrichtung S3 ist eine Umschaltung und dient in einem Aktivbetrieb-Modus der Federspeichersteuerungseinrichtung 214 zu einem Umschalten in Abhängigkeit von einer Federspeicherbremsanforderung FBA.

Die erfindungsgemäße Federspeichersteuerungseinrichtung 214 umfasst also das weitere Drucksteuerungsmittel 214b, welches eingerichtet ist, den Aktivbetrieb-Federspeicherlösedruck pFSb in Abhängigkeit von der, insbesondere automatisch und/oder manuell bereitgestellten, Federspeicherbremsanforderung FBA zu steuern, wobei die weitere Steuereinrichtung S3 für die von der Federspeicherbremsanforderung FBA abhängige Steuerung des Aktivbetrieb-Federspeicherlösedrucks pFSb eingerichtet ist, den Aktivbetrieb-Druckluftpfad L10 in Abhängigkeit der Federspeicherbremsanforderung FBA entweder mit dem von der Vorratsdrucklufteinrichtung 4; 4,6,19 gespeisten weiteren Versorgungspfad L9 oder mit dem weiteren Auslass AL3 ins Freie zu verbinden.

Darüber hinaus umfasst die Federspeichersteuerungseinrichtung 214 ein Betriebsmodus-Umschaltmittel 214c mit einem Steuereingang zum Empfang einer Umschaltanforderung UA und ein Überlagerungsschutzmittel 214d.

Das Betriebsmodus-Umschaltmittel 214c weist einen ersten Anschluss auf, welcher mit der Verbindungsleitungen L16 und über diese mit dem dritten Anschluss der zusätzlichen Steuereinrichtung S2 verbunden ist. Sie weist weiterhin einen zweiten Anschluss auf, welcher mit der Verbindungsleitungen L10 und über diese mit dem dritten Anschluss der weiteren Steuereinrichtung S3 verbunden ist. Und sie weist einen dritten Anschluss auf, welcher mit der Verbindungsleitungen L11 verbunden ist. Die Verbindungsleitung L11 weist zum Übergang vom Wagenkasten WK zum Drehgestell DG einen als Schlauch ausgebildeten Abschnitt Lila auf.

Auch das Betriebsmodus-Umschaltmittel 214c ist eine Umschaltung und dient zum Umschalten vom Aktivbetrieb-Modus in den Schleppbetrieb-Modus bzw. vom Schleppbetrieb-Modus in den Aktivbetrieb-Modus in Abhängigkeit von einer Umschaltanforderung UA.

Bei der erfindungsgemäßen Federspeichersteuerungseinrichtung 214 ist also das Betriebsmodus-Umschaltmittel 214c eingerichtet,
- in Abhängigkeit der Umschaltanforderung UA zwischen einem Schleppbetrieb-Modus und einem Aktivbetrieb-Modus umzuschalten,
- im Schleppbetrieb-Modus den Schleppbetrieb-Federspeicherlösedruck pFSa als einen Federspeicherlösedruck pFS auszugeben und
- im Aktivbetrieb-Modus den Aktivbetrieb-Federspeicherlösedruck pFSb als den Federspeicherlösedruck pFS auszugeben.

Im aktiven Betrieb des Fahrzeugs F, bei dem das Betriebsmodus-Umschaltmittel 214c mittels der Umschaltanforderung aus seiner hier gezeigten einen Schaltstellung (Schleppbetrieb-Modus) in seine andere Schaltstellung (Aktivbetrieb-Modus) umgeschaltet ist, wird der Federspeicherbremsaktuator 11 über die Steuereinrichtung S3 gesteuert. Ein Anlegen des Reibbremsmittels unter der Einwirkung der Kraft der Federspeicherfeder 27 des Federspeicherbremsaktuators 11 erfolgt im aktiven Betrieb des Fahrzeugs F durch Umschalten der Steuereinrichtung S3 in ihre hier gezeigte eine Schaltstellung, bei der eine Verbindung des Federspeicherbremszylinders 25 über das Betriebsmodus-Umschaltmittel 214c zu dem weiteren Auslass A3 ins Freie besteht - der Federspeicherbremszylinder 25 also entlüftet wird.

Befindet sich das Umschaltmittel 214c in seiner hier gezeigten einen Schaltstellung (Schleppbetrieb-Modus), so befindet sich die gesamte Federspeichersteuerungseinrichtung 214 für den Schleppbetrieb des Fahrzeugs F in einem Schleppbetrieb-Modus.

Befindet sich das Umschaltmittel 214c in seiner anderen Schaltstellung (Aktivbetrieb-Modus), so befindet sich die gesamte Federspeichersteuerungseinrichtung 214 für den aktiven Betrieb des Fahrzeugs F in einem Aktivbetrieb-Modus.

Im Schleppbetrieb-Modus der Federspeichersteuerungseinrichtung 214 sind zwei parallele Pfade P1 und P2 vorgesehen, um die Druckluft aus der Vorratsdrucklufteinrichtung 4,6,19; 4 auf den ersten Eingang des Betriebsmodus-Umschaltmittels 214c und dann von dessen dritten Anschluss über das Überlagerungsschutzmittel 214d; 214d Federspeichersteuerungsverfahren auf den Federspeicherbremsaktuator 11 durchzuschalten. Hierzu dienen die Steuereinrichtungen S1 und S2 des Drucksteuerungsmittels 214a.

Dabei dient der Druck pHL der Hauptluftleitung HL, welcher an einem Steuereingang der Steuereinrichtung S1 anliegt, als Steuerdruck für die Steuereinrichtung S1. Mittels der Steuereinrichtung S1 ist das Drucksteuerungsmittel 214a also eingerichtet, einen Schleppbetrieb-Federspeicherlösedruck pFSa für den Federspeicherbremsaktuator 11 in Abhängigkeit vom Druck pHL in der Hauptluftleitung HL des Fahrzeugs F zu steuern. Der Federspeicherbremsaktuator 11 bzw. die Federspeicherbremse des Fahrzeugs ist also zum einen HL-gesteuert.

Der zweite parallele Pfad P2 bildet einen Bypass zum ersten Pfad P1 und ist vorgesehen, um im Schleppbetrieb-Modus der Federspeichersteuerungseinrichtung 214 mit dem fahrzeugbezogenen Geschwindigkeitssignal Sv; Sn high-aktiv die Druckluft aus der Vorratsdrucklufteinrichtung 4,6,19; 4 unabhängig vom Druck pHL in der Hauptluftleitung HL des Fahrzeugs F auf den Federspeicherbremsaktuator 11 durchzuschalten zu können. Vorzugsweise immer dann, wenn sich das Fahrzeug im Schleppbetrieb nicht im Stillstand befindet. Der Federspeicherbremsaktuator 11 bzw. die Federspeicherbremse des Fahrzeugs ist also zum anderen geschwindigkeitsgesteuert. Dabei wird die Wirkung der HL-Steuerung nach Art eines Bypasses aufgehoben; vorzugsweise, solange sich das Fahrzeug im Schleppbetrieb in Bewegung befindet.

Mit dem bei der erfindungsgemäßen Lösung ausgebildeten zweiten Pfad P2 ist eine Maßnahme realisiert, mittels derer bei einer Schnellbremsung mit Gleitschutzregelung im Schleppbetrieb des Fahrzeugs das Anlegen der Federspeicherbremse verhindert wird, wenn sich das Fahrzeug bewegt. Somit wird bei Schnellbremsungen im Schleppbetrieb des Fahrzeugs eine unerwünschte Radflachstellenbildung, welche von der aktiven Gleitschutzregelung nicht verhindert werden kann, auf andere einfache Weise verhindert, welche darin besteht, dass im Schleppbetrieb geschwindigkeitsabhängig aktiv die Druckluft aus der Vorratsdrucklufteinrichtung 4,6,19; 4 in den Federspeicherbremszylinder 25 durchgeschaltet wird. Solange ausreichend Druckluft der Vorratsdrucklufteinrichtung 4,6,19; 4 vorhanden ist, lässt sich der Federspeicherbremsaktuator 11 über den Pfad P2 lösen, unabhängig von dem Pfad P1 über welchen die HL-Steuerung des Federspeicherbremsaktuators 11 realisiert ist.

Durch das fahrzeugbezogene Geschwindigkeitssignal Sv; Sn ist sichergestellt, dass im Stillstand automatisch auf die HL-Steuerung des Federspeicherbremsaktuators 11 umgeschaltet und das Reibbremsmittel 24 unter der Kraft der Federspeicherfeder 27 vollständig angelegt wird, wenn der Druck pHL der Hauptluftleitung HL auf das SB-Niveau abgesenkt ist.

Da die Ansteuerung der zusätzliche Steuereinrichtung S2 - also die Ansteuerung des geschwindigkeitssignalabhängigen Lösens des Federspeicherbremsaktuators 11 - high-aktiv ausgeführt ist, ist dabei sichergestellt, dass im energielosen Zustand des Fahrzeugs die Funktionsweise der HL-Steuerung des Federspeicherbremsaktuators 11 nicht beeinträchtigt ist.

Das gezeigte Überlagerungsschutzmittel 214d ist ein dezentral angeordnetes Überlagerungsschutzmittel und weist einen ersten Anschluss auf, welcher mit der Verbindungsleitung L11 verbunden ist, im Zuge dessen ein Abschnitt Lila als Schlauch ausgebildet ist. Das Überlagerungsschutzmittel 214d weist weiterhin einen zweiten Anschluss auf, welcher mit der Verbindungsleitungen L12 verbunden ist, die dem Schlauch L4a in Richtung des Bremsaktuators 9 nachgeordnet am Abzweig A4 von der Verbindungsleitungen L4 abzweigt. Und das Überlagerungsschutzmittel 214d weist einen dritten Anschluss auf, welcher mit der Verbindungsleitungen L13 und damit mit dem Anschluss des Federspeicherbremszylinders 25 verbunden ist.

Alternativ hierzu kann - wie mit gestrichelten Linien gezeigt - anstelle des dezentral angeordneten Überlagerungsschutzmittels 214d ein zentral angeordnetes Überlagerungsschutzmittel 214d' vorgesehen sein.

Bei diesem ist dann ein erster Anschluss mit der Verbindungsleitung L11' verbunden. Ein zweiter Anschluss des Überlagerungsschutzmittels 214d' ist mit der Verbindungsleitungen L12' verbunden, die am Abzweig A4' von der Verbindungsleitungen L3 abzweigt Und ein dritter Anschluss des Überlagerungsschutzmittels 214d' ist mit der Verbindungsleitung L13' verbunden.

Bei der Ausführungsform der erfindungsgemäßen Vorrichtung, bei welcher das dezentrale Überlagerungsschutzmittel 214d zum Einsatz kommt, ist für den aus dem pneumatischen Bremsaktuator 9 und dem Federspeicherbremsaktuator 11 gebildeten kombinierten Aktuator - ein dezentraler Überlagerungsschutz realisiert. Diese dezentrale (lokale) Ausführung des Überlagerungsschutzes hat den Vorteil, dass die Wirksamkeit des Überlagerungsschutzes auch bei einem Defekt der zum Federspeicherbremszylinder 25 führenden Verbindungsleitungen (z.B. bei einem Riss des Schlauches Lila gewährleistet ist. Dieser Vorteil besteht auch beim alternativen Einsatz des eingangs erwähnten mechanischen bzw. rein mechanischen Überlagerungsschutz, da auch dieser dezentral (lokal) ausgeführt ist.

Bei der Ausführungsform der erfindungsgemäßen Vorrichtung, bei welcher das zentrale Überlagerungsschutzmittel 214d' zum Einsatz kommt, ist für den aus dem pneumatischen Bremsaktuator 9 und dem Federspeicherbremsaktuator 11 gebildeten kombinierten Aktuator - ein zentraler Überlagerungsschutz realisiert. Nachteilig ist, dass der zentraler Überlagerungsschutz bei Riss des Schlauches L13'a nicht wirksam ist.

Bei der erfindungsgemäßen Federspeichersteuerungseinrichtung 214 weist das Überlagerungsschutzmittel 214d;214d' also Folgendes auf:
- einen ersten Anschluss, welcher mit dem Federspeicherlösedruck pFS beaufschlagt ist,
- einem zweiten Anschluss, welcher mit einem Überlagerungsschutzdruck pC; pC* beaufschlagt ist und
- einem dritten Anschluss, welcher druckluftleitend mit dem Federspeicherbremszylinder 25 des Federspeicherbremsaktuators 11 verbunden ist.

Dabei ist das Überlagerungsschutzmittel 214d;214d' eingerichtet ist, aus dem Federspeicherlösedruck pFS und dem Überlagerungsschutzdruck pC; pC* einen modifizierten, den kombinierten Aktuator vor Bremskraftüberlagerung schützenden Federspeicherlösedruck pFS_{pC}; pFS_{pC*} zu bilden und an ihrem dritten Anschluss auszugeben.

Dabei ist bei der Ausführungsform der erfindungsgemäßen Federspeichersteuerungseinrichtung 214, bei welcher das dezentral angeordnete Überlagerungsschutzmittel 214d zum Einsatz kommt, der von der Gleitschutzregelungseinheit GS geregelte pneumatischer Bremsdruck pC* als der Überlagerungsschutzdruck bereitgestellt. Bei dieser Ausführungsform reduziert das Überlagerungsschutzmittel 214d die Federspeicherbremskraft im Maße des von der Gleitschutzregelungseinheit GS ausgegebenen geregelten pneumatischen Bremsdruckes pC*.

Alternativ ist bei der Ausführungsform der erfindungsgemäßen Federspeichersteuerungseinrichtung 214, bei welcher das zentral angeordnete Überlagerungsschutzmittel 214d' zum Einsatz kommt, der von der Bremssteuereinheit BS ausgesteuerte pneumatischer Bremsdruck pC als der Überlagerungsschutzdruck bereitgestellt. Bei dieser Ausführungsform reduziert das Überlagerungsschutzmittel 214d' die Federspeicherbremskraft im Maße des durch die Bremssteuereinheit BS aufgebauten pneumatischen Bremsdruckes pC (C-Druck). Allerdings wäre es auch bei zentral angeordnetem Überlagerungsschutzmittel möglich, den von der Gleitschutzregelungseinheit GS ausgegebenen geregelten pneumatischen Bremsdruckes pC* als Überlagerungsschutzdruck bereitzustellen. Dazu müsste anstelle des Abzweiges A4' von der Verbindungsleitungen L3 ein Abzweig von der Verbindungsleitungen L4 im Bereich zwischen der Gleitschutzregelungseinheit GS und dem Schlauch L4a vorgesehen werden.

Der Federspeicherbremsaktuator 11 kann in hier nicht gezeigter Weise zusätzlich eingerichtet sein, manuell bedient; beispielsweise manuell abgesperrt und notgelöst zu werden. Hierzu kann eine elektrische Bedienung mit einem betätigbaren Bedienelement oder eine manuelle Bedienung vorgesehen sein.

Die erfindungsgemäße Federspeichersteuerungseinrichtung 214 und das erfindungsgemäße Federspeichersteuerungsverfahren ermöglichen:
a) das beliebige Anlegen und Lösen der Federspeicherbremse im aktiven Betrieb des Fahrzeuges,
b) die Umschaltung vom aktiven Betrieb auf den Schleppbetrieb und zurück,
c) das Lösen der Federspeicherbremse im Schleppbetrieb, wenn die Hauptluftleitung HL mit Druck gefüllt ist und
d) das geschwindigkeitsabhängige Lösen der Federspeicherbremse im Schleppbetrieb, wobei die Wirkung der HL-Steuerung nach Art eines Bypasses aufgehoben wird.

### Bezugszeichenliste

- F: Fahrzeug
- WK: ein Wagenkasten des Fahrzeugs
- DG: ein Drehgestell des Fahrzeugs
- 1: bekannte Vorrichtung zum Bremsen eines Fahrzeugs
- 101: weitere bekannte Vorrichtung zum Bremsen eines Fahrzeugs
- 201: erfindungsgemäße Vorrichtung zum Bremsen des Fahrzeugs F
- 3,5: Rückschlagventile
- 4,6: Reservedruckbehälter
- 7,8: Bremssteuerungseinrichtungen einer pneumatischen Bremse bei der Vorrichtung 1(in Form von Bremssteuerungsmitteln zur Bremszylinderdruck-Erzeugung)
- 107: Bremssteuerungseinrichtung bei der Vorrichtung 101
- 207: Bremssteuerungseinrichtung bei der Vorrichtung 201
- 9,10: pneumatische Bremsaktuatoren der pneumatischen Bremsen
- 14: Federspeichersteuerungseinrichtung einer Federspeicherbremse bei der Vorrichtung 1 (in Form von Federspeichersteuerungsmitteln)
- 114: Federspeichersteuerungseinrichtung einer Federspeicherbremse bei der Vorrichtung 101
- 114d: Überlagerungsschutzmittel der Federspeichersteuerungseinrichtung 114
- 214: Federspeichersteuerungseinrichtung einer Federspeicherbremse bei der Vorrichtung 201
- 11,12: Federspeicherbremsaktuatoren der Federspeicherbremsen
- 15: Kolbenstange eines jeweiligen pneumatischen Bremsaktuators
- 18: Kolbenstange eines jeweiligen Federspeicherbremsaktuators
- 19: Minimaldruckauswahleinheit
- 20: Hebelmechanik
- 21: Bremszylinder des pneumatischen Bremsaktuators
- 22: Bremskolben des pneumatischen Bremsaktuators
- 23: Rückholfeder des pneumatischen Bremsaktuators
- 24: Reibbremsmittel mit Bremsbelag
- 25: Federspeicherbremszylinder
- 26: Federspeicherbremskolben
- 27: Federspeicherfeder
- 28: Bewegteil (z.B. Fahrzeugrad oder Bremsscheibe)
- 29: Fahrzeugsachse
- 30: Sensor, insbesondere Geschwindigkeitssensor oder Drehzahlsensor
- LM: pneumatische Leitungsmatrix
- HL: Hauptluftleitung
- HB: Hauptluftbehälterleitung (Speiseleitung)
- p4;pR: Vorratsdruck
- pHL: Druck in der Hauptluftleitung HL
- pFSa: Schleppbetrieb-Federspeicherlösedruck
- pFSb: Aktivbetrieb-Federspeicherlösedruck
- pFS: Federspeicherlösedruck
- pC;pC*: Überlagerungsschutzdruck
- pFS_{pC};pFS_{pC*}: modifizierter, vor Bremskraftüberlagerung schützender Federspeicherlösedruck
- SSv;SSn: Sensorsignal des Sensors 30
- Sv;Sn: fahrzeugbezogenes Geschwindigkeitssignal
- K1,K2: Kommunikationspfade
- A1-A5: Abzweige der pneumatischen Leitungsmatrix LM
- FBA: Federspeicherbremsanforderung
- UA: Umschaltanforderung
- BA: Bremsanforderung
- BS: Bremssteuereinheit der Bremssteuerungseinrichtung 207
- GS: Gleitschutzregelungseinheit der Bremssteuerungseinrichtung 207
- GSA: Gleitschutzregelungsanforderung
- 214a: Drucksteuerungsmittel der Federspeichersteuerungseinrichtung 214
- 214b: weiteres Drucksteuerungsmittel der Federspeichersteuerungseinrichtung 214
- 214c: Umschaltmittel der Federspeichersteuerungseinrichtung 214
- 214d;214d': Überlagerungsschutzmittel der Federspeichersteuerungseinrichtung 214
- 51: Steuereinrichtung des Drucksteuerungsmittels 214a
- AL1: Auslass ins Freie
- S2: zusätzliche Steuereinrichtung des Drucksteuerungsmittels 214a
- S3: Steuereinrichtung des weitere Drucksteuerungsmittels 214b
- AL3: weiterer Auslass ins Freie

## Patentansprüche

1. Vorrichtung (201) zum Bremsen eines Fahrzeugs (F),
- mit einer Hauptluftbehälterleitung (HB) und einer Hauptluftleitung (HL),
- mit einer Bremssteuerungseinrichtung (207),
- mit einem Reservedruckbehälter (4) einer Vorratsdrucklufteinrichtung (4; 4,6,19), welcher über ein Rückschlagventil (3) mit der Hauptluftbehälterleitung (HB) und über die Bremssteuerungseinrichtung (207) mit zumindest einem Bremsaktuator (9) verbunden ist, und
- mit einer Federspeichersteuereinrichtung (214) mit einem Drucksteuerungsmittel (214a),
- wobei das Drucksteuerungsmittel (214a) eingerichtet ist, in einem Schleppbetrieb-Modus, bei welchem das Fahrzeug (F) als Wagen abgeschleppt werden kann, einen Schleppbetrieb-Federspeicherlösedruck (pFSa) für zumindest einen Federspeicherbremsaktuator (11) einer Federspeicherbremse des Fahrzeugs in Abhängigkeit vom Druck (pHL) in der Hauptluftleitung (HL) des Fahrzeugs (F) zu steuern,
- wobei für die vom Druck (pHL) in der Hauptluftleitung (HL) des Fahrzeugs (F) abhängige Steuerung des Schleppbetrieb-Federspeicherlösedrucks (pFSa) eine Steuereinrichtung (S1) des Drucksteuerungsmittels (214a) eingerichtet ist, einen ersten Abschnitt (L15) eines Schleppbetrieb-Druckluftpfades (L15, L16) in Abhängigkeit des Druckes (pHL) in der Hauptluftleitung (HL) entweder mit einem von der Vorratsdrucklufteinrichtung (4; 4,6,19) gespeisten Versorgungspfad (L14) oder mit einem Auslass (AL1) ins Freie zu verbinden, und
- wobei das Drucksteuerungsmittel (214a) eingerichtet ist, den Schleppbetrieb-Federspeicherlösedruck (pFSa) auch in Abhängigkeit von einem fahrzeugbezogenen Geschwindigkeitssignal (Sv;Sn) zu steuern.

2. Vorrichtung (201) nach Anspruch 1,
**dadurch gekennzeichnet,**
**dass** das Drucksteuerungsmittel (214a) eingerichtet ist, einen Vorratsdruck (p4;pR) einer Vorratsdrucklufteinrichtung (4; 4,6,19) unabhängig von dem Druck (pHL) in der Hauptluftleitung (HL) als den Schleppbetrieb-Federspeicherlösedruck (pFSa) auszugeben, wenn ein vom fahrzeugbezogenen Geschwindigkeitssignal (Sv;Sn) angegebener Wert einen vorgegebenen Grenzwert übersteigt.

3. Vorrichtung (201)) nach Anspruch 2,
**dadurch gekennzeichnet,**
**dass** für die von dem fahrzeugbezogenen Geschwindigkeitssignal (Sv;Sn) abhängige Steuerung des Schleppbetrieb-Federspeicherlösedrucks (pFSa) eine zusätzliche Steuereinrichtung (S2) des Drucksteuerungsmittels (214a) eingerichtet ist, einen zweiten Abschnitt (L16) des Schleppbetrieb-Druckluftpfades (L15, L16) in Abhängigkeit des fahrzeugbezogenen Geschwindigkeitssignals (Sv;Sn) entweder mit dem ersten Abschnitt (L15) des Schleppbetrieb-Druckluftpfades (L15, L16) oder mit einem von der Vorratsdrucklufteinrichtung (4;4,6,19) gespeisten zusätzlichen Versorgungspfad (L17) zu verbinden.

4. Vorrichtung (201)) nach einem der Ansprüche 1 bis 3,
**gekennzeichnet, durch**
ein weiteres Drucksteuerungsmittel (214b), welches eingerichtet ist, einen Aktivbetrieb-Federspeicherlösedruck (pFSb) in Abhängigkeit von einer, insbesondere automatisch und/oder manuell bereitgestellten, Federspeicherbremsanforderung (FBA) zu steuern,
wobei für die von der Federspeicherbremsanforderung (FBA) abhängige Steuerung des Aktivbetrieb-Federspeicherlösedrucks (pFSb) eine weitere Steuereinrichtung (S3) eingerichtet ist, einen Aktivbetrieb-Druckluftpfad (L10) in Abhängigkeit der Federspeicherbremsanforderung (FBA) entweder mit einem von der Vorratsdrucklufteinrichtung (4; 4,6,19) gespeisten weiteren Versorgungspfad (L9) oder mit einem weiteren Auslass (AL3) ins Freie zu verbinden.

5. Vorrichtung (201)) nach Anspruch 4,
**gekennzeichnet, durch**
ein Betriebsmodus-Umschaltmittel (214c), welches eingerichtet ist,
- in Abhängigkeit einer Umschaltanforderung (UA) zwischen dem Schleppbetrieb-Modus und einem Aktivbetrieb-Modus umzuschalten,
- im Schleppbetrieb-Modus den Schleppbetrieb-Federspeicherlösedruck (pFSa) als einen Federspeicherlösedruck (pFS) auszugeben und
- im Aktivbetrieb-Modus den Aktivbetrieb-Federspeicherlösedruck (pFSb) als den Federspeicherlösedruck (pFS) auszugeben.

6. Vorrichtung (201)) nach Anspruch 5,
**gekennzeichnet, durch**
ein Überlagerungsschutzmittel (214d;214d') mit
- einem ersten Anschluss, welcher mit dem Federspeicherlösedruck (pFS) beaufschlagt ist,
- einem zweiten Anschluss, welcher mit einem Überlagerungsschutzdruck (pC; pC*) beaufschlagt ist und
- einem dritten Anschluss, welcher druckluftleitend mit einem Federspeicherbremszylinder (25) des Federspeicherbremsaktuators (11) verbunden ist,
- wobei das Überlagerungsschutzmittel (214d;214d') eingerichtet ist, aus dem Federspeicherlösedruck (pFS) und dem Überlagerungsschutzdruck (pC; pC*) einen modifizierten, vor Bremskraftüberlagerung schützenden Federspeicherlösedruck (pFS_{pC}; pFS_{pC*}) zu bilden und an ihrem dritten Anschluss auszugeben.

7. Vorrichtung (201)) nach Anspruch 6,
**dadurch gekennzeichnet,**
- **dass** ein von einer Bremssteuereinheit (BS) ausgesteuerter pneumatischer Bremsdruck (pC) als der Überlagerungsschutzdruck bereitgestellt ist oder
- **dass** alternativ ein von einer der Bremssteuereinheit (BS) nachgeordneten Gleitschutzregelungseinheit (GS) geregelter pneumatischer Bremsdruck (pC*) als der Überlagerungsschutzdruck bereitgestellt ist.

8. Vorrichtung (201)) nach Anspruch 7,
**dadurch gekennzeichnet,**
- **dass** bei in den Schleppbetrieb-Modus umgeschalteten Betriebsmodus-Umschaltmittel (214c) ein erster Anschluss und ein dritter Anschluss des Betriebsmodus-Umschaltmittels (214c) druckluftleitend verbunden sind und
- **dass** bei in den Aktivbetrieb-Modus umgeschalteten Betriebsmodus-Umschaltmittel (214c) ein zweiter Anschluss und der dritte Anschluss des Betriebsmodus-Umschaltmittels (214c) druckluftleitend verbunden sind,
- wobei der erste Anschluss des Betriebsmodus-Umschaltmittels (214c) mit dem zweiten Abschnitt (L16) des Schleppbetrieb-Druckluftpfades (L15, L16) druckluftleitend verbunden ist,
- wobei der zweite Anschluss des Betriebsmodus-Umschaltmittels (214c) mit dem Aktivbetrieb-Druckluftpfad (L10) druckluftleitend verbunden ist und
- wobei der dritte Anschluss des Betriebsmodus-Umschaltmittels (214c) mit dem ersten Anschluss des Überlagerungsschutzmittels (214d;214d') druckluftleitend verbunden ist.

9. Fahrzeugs (F), insbesondere Schienenfahrzeug,
**gekennzeichnet, durch**
eine Vorrichtung (201) nach einem der vorangehenden Ansprüche.

10. Federspeichersteuerungsverfahren für eine Vorrichtung (201) zum Bremsen eines Fahrzeugs (F), welche Vorrichtung (201) eine Hauptluftbehälterleitung (HB), eine Hauptluftleitung (HL), eine Bremssteuerungseinrichtung (207) sowie einen Reservedruckbehälter (4) einer Vorratsdrucklufteinrichtung (4; 4,6,19) aufweist, wobei der Reservedruckbehälter (4) über ein Rückschlagventil (3) mit der Hauptluftbehälterleitung (HB) und über die Bremssteuerungseinrichtung (207) mit zumindest einem Bremsaktuator (9) verbunden ist,
bei dem ein Drucksteuerungsmittel (214a) in einem Schleppbetrieb-Modus, bei welchem das Fahrzeug (F) als Wagen abgeschleppt werden kann, einen Schleppbetrieb-Federspeicherlösedruck (pFSa) für zumindest einen Federspeicherbremsaktuator (11) einer Federspeicherbremse des Fahrzeugs in Abhängigkeit vom Druck (pHL) in einer Hauptluftleitung (HL) des Fahrzeugs (F) steuert,
- bei dem für die vom Druck (pHL) in der Hauptluftleitung (HL) des Fahrzeugs (F) abhängige Steuerung des Schleppbetrieb-Federspeicherlösedrucks (pFSa) eine Steuereinrichtung (S1) des Drucksteuerungsmittels (214a) einen ersten Abschnitt (L15) eines Schleppbetrieb-Druckluftpfades (L15, L16) in Abhängigkeit des Druckes (pHL) in der Hauptluftleitung (HL) entweder mit einem von der Vorratsdrucklufteinrichtung (4; 4,6,19) gespeisten Versorgungspfad (L14) oder mit einem Auslass (AL1) ins Freie verbindet und
- bei dem das Drucksteuerungsmittel (214a) den Schleppbetrieb-Federspeicherlösedruck (pFSa) auch in Abhängigkeit von einem fahrzeugbezogenen Geschwindigkeitssignal (Sv;Sn) steuert.

11. Federspeichersteuerungsverfahren nach Anspruche 10,
**dadurch gekennzeichnet,**
- **dass** das Drucksteuerungsmittel (214a) einen Vorratsdruck (p4;pR) einer Vorratsdrucklufteinrichtung (4; 4,6,19) unabhängig von dem Druck (pHL) in der Hauptluftleitung (HL) als den Schleppbetrieb-Federspeicherlösedruck (pFSa) ausgibt, wenn ein vom fahrzeugbezogenen Geschwindigkeitssignal (Sv;Sn) angegebener Wert einen vorgegebenen Grenzwert übersteigt.

12. Federspeichersteuerungsverfahren nach Anspruch 11,
**dadurch gekennzeichnet,**
**dass** für die von dem fahrzeugbezogenen Geschwindigkeitssignal (Sv;Sn) abhängige Steuerung des Schleppbetrieb-Federspeicherlösedrucks (pFSa) eine zusätzliche Steuereinrichtung (S2) des Drucksteuerungsmittels (214a) einen zweiten Abschnitt (L16) des Schleppbetrieb-Druckluftpfades (L15, L16) in Abhängigkeit des fahrzeugbezogenen Geschwindigkeitssignals (Sv;Sn) entweder mit dem ersten Abschnitt (L15) oder mit einem von der Vorratsdrucklufteinrichtung (4; 4,6,19) gespeisten zusätzlichen Versorgungspfad (L17) verbindet.

13. Federspeichersteuerungsverfahren nach einem der Ansprüche 10 bis 12,
**dadurch gekennzeichnet,**
**dass** ein weiteres Drucksteuerungsmittel (214b) einen Aktivbetrieb-Federspeicherlösedruck (pFSb) in Abhängigkeit von einer, insbesondere automatisch und/oder manuell bereitgestellten, Federspeicherbremsanforderung (FBA) steuert,
wobei für die von der Federspeicherbremsanforderung (FBA) abhängige Steuerung des Aktivbetrieb-Federspeicherlösedrucks (pFSb) eine weitere Steuereinrichtung (S3) einen Aktivbetrieb-Druckluftpfad (L10) in Abhängigkeit der Federspeicherbremsanforderung (FBA) entweder mit einem von der Vorratsdrucklufteinrichtung (4; 4,6,19) gespeisten weiteren Versorgungspfad (L9) oder mit einem weiteren Auslass (AL3) ins Freie verbindet.

14. Federspeichersteuerungsverfahren nach Anspruch 13,
**dadurch gekennzeichnet,**
**dass** ein Betriebsmodus-Umschaltmittel (214c)
- in Abhängigkeit einer Umschaltanforderung (UA) zwischen dem Schleppbetrieb-Modus und einem Aktivbetrieb-Modus umschaltet,
- im Schleppbetrieb-Modus den Schleppbetrieb-Federspeicherlösedruck (pFSa) als einen Federspeicherlösedruck (pFS) ausgibt und
- im Aktivbetrieb-Modus den Aktivbetrieb-Federspeicherlösedruck (pFSb) als den Federspeicherlösedruck (pFS) ausgibt.

15. Federspeichersteuerungsverfahren nach Anspruch 14,
**dadurch gekennzeichnet,**
- **dass** ein erster Anschluss eines Überlagerungsschutzmittels (214d;214d') mit dem Federspeicherlösedruck (pFS) beaufschlagt wird und
- **dass** ein zweiter Anschluss des Überlagerungsschutzmittels (214d;214d') mit einem Überlagerungsschutzdruck (pC; pC*) beaufschlagt wird,
- wobei das Überlagerungsschutzmittel (214d;214d') aus dem Federspeicherlösedruck (pFS) und dem Überlagerungsschutzdruck (pC; pC*) einen modifizierten, vor Bremskraftüberlagerung schützenden Federspeicherlösedruck (pFS_{pC}; pFS_{pC*}) bildet und an einem dritten Anschluss des Überlagerungsschutzmittels (214d;214d'), welcher druckluftleitend mit einem Federspeicherbremszylinder (25) des Federspeicherbremsaktuators (11) verbunden ist, ausgibt.

16. Federspeichersteuerungsverfahren nach Anspruch 15,
**dadurch gekennzeichnet,**
- **dass** ein von einer Bremssteuereinheit (BS) ausgesteuerter pneumatischer Bremsdruck (pC) als der Überlagerungsschutzdruck bereitgestellt wird oder
- **dass** alternativ ein von einer der Bremssteuereinheit (BS) nachgeordneten Gleitschutzregelungseinheit (GS) geregelter pneumatischer Bremsdruck (pC*) als der Überlagerungsschutzdruck bereitgestellt wird.

17. Federspeichersteuerungsverfahren nach Anspruch 16,
**dadurch gekennzeichnet,**
- **dass** beim Umschalten des Betriebsmodus-Umschaltmittels (214c) in den Schleppbetrieb-Modus ein erster Anschluss und ein dritter Anschluss des Betriebsmodus-Umschaltmittels (214c) druckluftleitend verbunden werden und
- **dass** beim Umschalten des Betriebsmodus-Umschaltmittels (214c) in den Aktivbetrieb-Modus ein zweiter Anschluss und der dritte Anschluss des Betriebsmodus-Umschaltmittels (214c) druckluftleitend verbunden werden,
- wobei der erste Anschluss des Betriebsmodus-Umschaltmittels (214c) mit dem zweiten Abschnitt (L16) des Schleppbetrieb-Druckluftpfades (L15, L16) druckluftleitend verbunden ist,
- wobei der zweite Anschluss des Betriebsmodus-Umschaltmittels (214c) mit dem Aktivbetrieb-Druckluftpfad (L10) druckluftleitend verbunden ist und
- wobei der dritte Anschluss des Betriebsmodus-Umschaltmittels (214c) mit dem ersten Anschluss des Überlagerungsschutzmittels (214d;214d') druckluftleitend verbunden ist.

## Claims

1. Apparatus (201) for braking a vehicle (F),
- with a main air reservoir line (HB) and a main air line (HL),
- with a brake control facility (207),
- with a reserve pressure vessel (4) of a supply compressed air facility (4; 4,6,19), which reserve pressure vessel is connected to the main air reservoir line (HB) via a non-return valve (3) and to at least one brake actuator (9) via the brake control facility (207), and
- with a spring mechanism control facility (214) with a pressure control means (214a),
- wherein the pressure control means (214a) is configured, in a towing operation mode, in which the vehicle (F) can be towed as a car, to control a towing operation spring mechanism release pressure (pFSa) for at least one spring-loaded brake actuator (11) of a spring-loaded brake of the vehicle as a function of the pressure (pHL) in the main air line (HL) of the vehicle (F),
- wherein for the control of the towing operation spring mechanism release pressure (pFSa) that is dependent upon the pressure (pHL) in the main air line (HL) of the vehicle (F), a control facility (S1) of the pressure control means (214a) is configured to connect a first section (L15) of a towing operation compressed air path (L15, L16), as a function of the pressure (pHL) in the main air line (HL), either to a supply path (L14) fed by the supply compressed air facility (4; 4,6,19) or to an outlet (AL1) to the outside, and
- wherein the pressure control means (214a) is configured to also control the towing operation spring mechanism release pressure (pFSa) as a function of a vehicle-related speed signal (Sv;Sn).

2. Apparatus (201) according to claim 1,
**characterised in that**
the pressure control means (214a) is configured to output a supply pressure (p4;pR) of a supply compressed air facility (4; 4,6,19) independently of the pressure (pHL) in the main air line (HL) as the towing operation spring mechanism release pressure (pFSa), when a value indicated by the vehicle-related speed signal (Sv;Sn) exceeds a predefined limit value.

3. Apparatus (201) according to claim 2,
**characterised in that**
for the control of the towing operation spring mechanism release pressure (pFSa) that is dependent upon the vehicle-related speed signal (Sv;Sn), an additional control facility (S2) of the pressure control means (214a) is configured to connect a second section (L16) of the towing operation compressed air path (L15, L16), as a function of the vehicle-related speed signal (Sv;Sn), either to the first section (L15) of the towing operation compressed air path (L15, L16) or to an additional supply path (L17) fed by the supply compressed air facility (4; 4,6,19).

4. Apparatus (201) according to one of claims 1 to 3,
**characterised by**
a further pressure control means (214b), which is configured to control an active operation spring mechanism release pressure (pFSb) as a function of an, in particular automatically and/or manually provided, spring-loaded brake request (FBA),
wherein for the control of the active operation spring mechanism release pressure (pFSb) that is dependent upon the spring-loaded brake request (FBA), a further control facility (S3) is configured to connect an active operation compressed air path (L10), as a function of the spring-loaded brake request (FBA), either to a further supply path (L9) fed by the supply compressed air facility (4; 4,6,19) or to a further outlet (AL3) to the outside.

5. Apparatus (201) according to claim 4,
**characterised by**
an operating mode switchover means (214c), which is configured
- to switch between the towing operation mode and an active operation mode as a function of a switchover request (UA),
- to output the towing operation spring mechanism release pressure (pFSa) as a spring mechanism release pressure (pFS) in the towing operation mode and
- to output the active operation spring mechanism release pressure (pFSb) as the spring mechanism release pressure (pFS) in the active operation mode.

6. Apparatus (201) according to claim 5,
**characterised by**
an overlap protection means (214d;214d') with
- a first port, to which the spring mechanism release pressure (pFS) is applied,
- a second port, to which an overlap protection pressure (pC; pC*) is applied and
- a third port, which is connected to a spring-loaded brake cylinder (25) of the spring-loaded brake actuator (11) in a manner conducting compressed air,
- wherein the overlap protection means (214d;214d') is configured to form, from the spring mechanism release pressure (pFS) and the overlap protection pressure (pC; pC*), a modified spring mechanism release pressure (pFS_{pC}; pFS_{pC*}) that is protected from brake force overlap and to output it at its third terminal.

7. Apparatus (201) according to claim 6,
**characterised in that**
- a pneumatic brake pressure (pC) actuated by a brake control unit (BS) is provided as the overlap protection pressure or
- alternatively, a pneumatic brake pressure (pC*) regulated by an anti-skid regulation unit (GS) downstream of the brake control unit (BS) is provided as the overlap protection pressure.

8. Apparatus (201) according to claim 7,
**characterised in that**
- in the event of operating mode switchover means (214c) being switched into the towing operation mode, a first port and a third port of the operating mode switchover means (214c) are connected in a manner conducting compressed air, and
- in the event of operating mode switchover means (214c) being switched into the active operation mode, a second port and the third port of the operating mode switchover means (214c) are connected in a manner conducting compressed air,
- wherein the first port of the operating mode switchover means (214c) is connected to the second section (L16) of the towing operation compressed air path (L15, L16) in a manner conducting compressed air,
- wherein the second port of the operating mode switchover means (214c) is connected to the active operation compressed air path (L10) in a manner conducting compressed air and
- wherein the third port of the operating mode switchover means (214c) is connected to the first port of the overlap protection means (214d;214d') in a manner conducting compressed air.

9. Vehicle (F), in particular rail vehicle,
**characterised by**
an apparatus (201) according to one of the preceding claims.

10. Spring mechanism control method for an apparatus (201) for braking a vehicle (F), which apparatus (201) has a main air reservoir line (HB), a main air line (HL), a brake control facility (207) as well as a reserve pressure vessel (4) of a supply compressed air facility (4; 4,6,19), wherein the reserve pressure vessel (4) is connected to the main air reservoir line (HB) via a non-return valve (3) and to at least one brake actuator (9) via the brake control facility (207), in which a pressure control means (214a), in a towing operation mode, in which the vehicle (F) can be towed as a car, controls a towing operation spring mechanism release pressure (pFSa) for at least one spring-loaded brake actuator (11) of a spring-loaded brake of the vehicle as a function of the pressure (pHL) in a main air line (HL) of the vehicle (F),
- in which for the control of the towing operation spring mechanism release pressure (pFSa) that is dependent upon the pressure (pHL) in the main air line (HL) of the vehicle (F), a control facility (S1) of the pressure control means (214a) connects a first section (L15) of a towing operation compressed air path (L15, L16), as a function of the pressure (pHL) in the main air line (HL), either to a supply path (L14) fed by the supply compressed air facility (4; 4,6,19) or to an outlet (AL1) to the outside, and
- in which the pressure control means (214a) also controls the towing operation spring mechanism release pressure (pFSa) as a function of a vehicle-related speed signal (Sv;Sn).

11. Spring mechanism control method according to claim 10, **characterised in that**
- the pressure control means (214a) outputs a supply pressure (p4;pR) of a supply compressed air facility (4; 4,6,19) independently of the pressure (pHL) in the main air line (HL) as the towing operation spring mechanism release pressure (pFSa), when a value indicated by the vehicle-related speed signal (Sv;Sn) exceeds a predefined limit value.

12. Spring mechanism control method according to claim 11,
**characterised in that**
for the control of the towing operation spring mechanism release pressure (pFSa) that is dependent upon the vehicle-related speed signal (Sv;Sn), an additional control facility (S2) of the pressure control means (214a) connects a second section (L16) of the towing operation compressed air path (L15, L16), as a function of the vehicle-related speed signal (Sv;Sn), either to the first section (L15) or to an additional supply path (L17) fed by the supply compressed air facility (4; 4,6,19).

13. Spring mechanism control method according to one of claims 10 to 12,
**characterised in that**
a further pressure control means (214b) controls an active operation spring mechanism release pressure (pFSb) as a function of an, in particular automatically and/or manually provided, spring-loaded brake request (FBA),
wherein for the control of the active operation spring mechanism release pressure (pFSb) that is dependent upon the spring-loaded brake request (FBA), a further control facility (S3) connects an active operation compressed air path (L10), as a function of the spring-loaded brake request (FBA), either to a further supply path (L9) fed by the supply compressed air facility (4; 4,6,19) or to a further outlet (AL3) to the outside.

14. Spring mechanism control method according to claim 13, **characterised in that**
an operating mode switchover means (214c)
- switches between the towing operation mode and an active operation mode as a function of a switchover request (UA),
- outputs the towing operation spring mechanism release pressure (pFSa) as a spring mechanism release pressure (pFS) in the towing operation mode and
- outputs the active operation spring mechanism release pressure (pFSb) as the spring mechanism release pressure (pFS) in the active operation mode.

15. Spring mechanism control method according to claim 14, **characterised in that**
- the spring mechanism release pressure (pFS) is applied to a first port of an overlap protection means (214d;214d') and
- an overlap protection pressure (pC; pC*) is applied to a second port of the overlap protection means (214d;214d'),
- wherein the overlap protection means (214d;214d') forms, from the spring mechanism release pressure (pFS) and the overlap protection pressure (pC; pC*), a modified spring mechanism release pressure (pFS_{pC}; pFS_{pC*}) that is protected from brake force overlap and outputs it at a third terminal of the overlap protection means (214d;214d'), which is connected to a spring-loaded brake cylinder (25) of the spring-loaded brake actuator (11) in a manner conducting compressed air.

16. Spring mechanism control method according to claim 15, **characterised in that**
- a pneumatic brake pressure (pC) actuated by a brake control unit (BS) is provided as the overlap protection pressure or
- alternatively, a pneumatic brake pressure (pC*) regulated by an anti-skid regulation unit (GS) downstream of the brake control unit (BS) is provided as the overlap protection pressure.

17. Spring mechanism control method according to claim 16, **characterised in that**
- when the operating mode switchover means (214c) is switched into the towing operation mode, a first port and a third port of the operating mode switchover means (214c) are connected in a manner conducting compressed air, and
- when the operating mode switchover means (214c) is switched into the active operation mode, a second port and the third port of the operating mode switchover means (214c) are connected in a manner conducting compressed air,
- wherein the first port of the operating mode switchover means (214c) is connected to the second section (L16) of the towing operation compressed air path (L15, L16) in a manner conducting compressed air,
- wherein the second port of the operating mode switchover means (214c) is connected to the active operation compressed air path (L10) in a manner conducting compressed air and
- wherein the third port of the operating mode switchover means (214c) is connected to the first port of the overlap protection means (214d;214d') in a manner conducting compressed air.

## Revendications

1. Installation (201) de freinage d'un véhicule (F),
- comprenant un conduit (HB) de récipient d'air principal et un conduit (HL) d'air principal,
- comprenant un dispositif (207) de commande de frein,
- comprenant un récipient (4) de pression de réserve, un dispositif (4 ; 4, 6, 19), d'air comprimé de réserve, qui par un clapet (3) anti-retour communique avec le conduit (HB) de réservoir d'air principal et par le dispositif (207) de commande de frein avec au moins un actionneur (9) de frein et
- comprenant un dispositif (214) de commande à accumulateur à ressort ayant un moyen (214a) de commande de la pression,
- dans laquelle le moyen (214a) de commande de la pression est agencé pour, dans un mode de fonctionnement en remorquage, dans lequel le véhicule (F) peut être remorqué comme voiture, commander, en fonction de la pression (pHL) dans le conduit (HL) d'air principal du véhicule (F), une pression (pFSa) de déclenchement d'accumulateur à ressort de fonctionnement en remorquage pour au moins un actionneur (11) de frein à accumulateur à ressort d'un frein à accumulateur à ressort du véhicule,
- dans laquelle pour la commande, en fonction de la pression (pHL) dans le conduit (HL) d'air principal du véhicule (F), de la pression (pFSa) de déclenchement de l'accumulateur à ressort de fonctionnement en remorquage, un dispositif (S1) de commande du moyen (214a) de commande de la pression est agencé pour mettre un premier tronçon (L15) d'un chemin (L15, L16) d'air comprimé de fonctionnement en remorquage en fonction de la pression (pHL) dans le conduit (HL) d'air principal en communication soit avec un chemin (L14) d'alimentation alimenté par le dispositif (4 ; 4, 6, 19) d'air comprimé de réservoir, soit avec une sortie (AL1) à l'air libre et,
- dans laquelle le moyen (214a) de commande de la pression est agencé pour commander la pression (pFSa) de déclenchement de l'accumulateur à ressort de fonctionnement en remorquage, également en fonction d'un signal (Sv ; Sn) de vitesse rapporté au véhicule.

2. Installation (201) suivant la revendication 1,
**caractérisée**
**en ce que** le moyen (214a) de commande de la pression est agencé pour donner, comme pression (pFSa) de déclenchement d'accumulateur à ressort de fonctionnement en remorquage, une pression (p4 ; pR) de réservoir d'un dispositif (4 ; 4, 6, 19) d'air comprimé de réservoir, indépendamment de la pression (pHL) dans le conduit (HL) d'air principal, si une valeur indiquée par le signal (Sv ; Sn) de vitesse rapporté au véhicule dépasse une valeur limite donnée à l'avance.

3. Installation (201) suivant la revendication 2,
**caractérisée**
**en ce que** pour la commande, en fonction du signal (Sv ; Sn) de vitesse rapporté au véhicule, de la pression (pFSa) de déclenchement de l'accumulateur à ressort de fonctionnement en remorquage, un dispositif (S2) de commande supplémentaire du moyen (214a) de commande de la pression est agencé pour mettre un deuxième tronçon (L16) du chemin (L15, L16) d'air comprimé de fonctionnement en remorquage en fonction du signal (Sv ; Sn) de vitesse rapporté au véhicule en communication soit avec le premier tronçon (L15) du chemin (L15, L16) d'air comprimé de fonctionnement en remorquage, soit avec un chemin (L17) d'alimentation supplémentaire alimenté par le dispositif (4 ; 4, 6, 19) d'air comprimé de réservoir.

4. Installation (201) suivant l'une des revendications 1 à 3,
**caractérisée par**
un autre moyen (214b) de commande de la pression, qui est agencé pour commander une pression (pFSb) de déclenchement d'accumulateur à ressort de fonctionnement actif en fonction d'une demande (FBA), en particulier donnée automatiquement et/ou manuellement de frein d'accumulateur à ressort,
dans laquelle pour la commande, en fonction de la demande (FBA) de frein d'accumulateur à ressort, de la pression (pFSb) de déclenchement d'accumulateur à ressort de fonctionnement actif, un autre dispositif (S3) de commande est agencé pour mettre un chemin (L10) d'air comprimé de fonctionnement actif, en fonction de la demande (FBA) de frein d'accumulateur à ressort, en communication soit avec un autre chemin (L9) d'alimentation alimenté par le dispositif (4 ; 4, 6, 19) d'air comprimé de réservoir, soit avec une autre sortie (AL3) à l'air libre.

5. Installation (201) suivant la revendication 4,
**caractérisée par**
un moyen (214c) de commutation en mode de fonctionnement, qui est agencé,
- pour commuter en fonction d'une demande (UA) de commutation entre le mode de fonctionnement en remorquage et un mode de fonctionnement actif,
- pour donner, en mode de fonctionnement en remorquage, la pression (pFSa) de déclenchement d'accumulateur à ressort de fonctionnement en remorquage sous la forme d'une pression (pFS) de déclenchement d'accumulateur à ressort et
- pour donner, en mode de fonctionnement actif, la pression (pFSb) de déclenchement d'accumulateur à ressort de fonctionnement actif sous la forme de la pression (pFS) de déclenchement d'accumulateur à ressort.

6. Installation (201) suivant la revendication 5, **caractérisée par**
un moyen (214 ; 214d') de protection de superposition comprenant
- un premier raccord, qui est alimenté en la pression (pFS) de déclenchement d'accumulateur à ressort,
- un deuxième raccord, qui est alimenté en une pression (pC ; pC*) de protection de superposition, et
- un troisième raccord, qui communique, avec conduite d'air comprimé, avec un cylindre (25) de frein à accumulateur à ressort de l'actionneur (11) de frein à accumulateur à ressort,
- dans laquelle le moyen (214d ; 214d') de protection de superposition est agencé pour former, à partir de la pression (pFS) de déclenchement d'accumulateur à ressort et de la pression (pC ; pC*) de protection de superposition, une pression (pFS_{pC} ; pFS_{pC*}) de déclenchement d'accumulateur à ressort modifiée protégeant de la superposition de force de freinage et pour la donner à son troisième raccord.

7. Installation (201) suivant la revendication 6, **caractérisée**
- **en ce qu'**une pression (pC) de frein pneumatique commandée par une unité (BS) de commande de frein est mise à disposition sous la forme de la pression de protection de superposition ou
- **en ce que** en variante une pression (pC*) de frein pneumatique réglée par une unité (GS) de régulation de protection de glissement en aval de l'unité (BS) de commande de frein est mise à disposition sous la forme de la pression de protection de superposition.

8. Installation (201) suivant la revendication 7, **caractérisée**
- **en ce que**, dans le moyen (214c) de commutation du mode de fonctionnement commuté en le mode de fonctionnement en remorquage, un premier raccord et un troisième raccord du moyen (214c) de commutation en mode de fonctionnement communique de manière à conduire de l'air comprimé et
- **en ce que**, dans le moyen (214c) de commutation du mode de fonctionnement commuté en le mode de fonctionnement actif, un deuxième raccord et le troisième raccord du moyen (214c) de commutation en mode de fonctionnement communiquent de manière à conduire de l'air comprimé,
- dans laquelle le premier raccord du moyen (214c) de commutation en mode de fonctionnement communique de manière à conduire de l'air comprimé avec le deuxième tronçon (L16) du chemin (L15, L16) d'air comprimé de fonctionnement en remorquage,
- dans laquelle le deuxième raccord du moyen (214c) de commutation en mode de fonctionnement communique de manière à conduire de l'air comprimé avec le chemin (L10) d'air comprimé de fonctionnement actif et
- dans laquelle le troisième raccord du moyen (214c) de commutation en mode de fonctionnement communique de manière à conduire de l'air comprimé avec le premier raccord du moyen (214d ; 214d') de protection de superposition.

9. Véhicule (F), en particulier véhicule ferroviaire,
**caractérisé par**
une installation (201) suivant l'une des revendications précédentes.

10. Procédé de commande d'accumulateur à ressort d'une installation (201) de freinage d'un véhicule (F), laquelle installation (201) a un conduit (HB) de réservoir d'air principal, un conduit (HL) d'air principal, un dispositif (207) de commande de frein ainsi qu'un réservoir (4) sous pression d'un dispositif (4 ; 4, 6, 19) d'air comprimé de réservoir, dans lequel le réservoir (4) sous pression communique par un clapet (3) anti-retour avec le conduit (HB) de réservoir d'air principal et par le dispositif (207) de commande de frein avec au moins un actionneur (9) de frein,
dans lequel un moyen (214a) de commande de la pression commande, dans un mode de fonctionnement en remorquage dans lequel le véhicule (F) peut être remorqué comme une voiture, une pression (pFSa) de déclenchement d'accumulateur à ressort de fonctionnement en remorquage pour au moins un actionneur (11) de frein d'accumulateur à ressort d'un frein à accumulateur à ressort du véhicule en fonction de la pression (pHL) dans un conduit (HL) d'air principal du véhicule (F),
- dans lequel pour la commande, en fonction de la pression (pHL) dans le conduit (HL) d'air principal du véhicule (F), de la pression (pFSa) de déclenchement d'accumulateur à ressort de fonctionnement en remorquage, un dispositif (S1) de commande du moyen (214a) de commande de la pression met un premier tronçon (L15) d'un chemin (L15, L16) d'air comprimé de fonctionnement en remorquage, en fonction de la pression (pHL) dans le conduit (HL) d'air principal, en communication soit avec un chemin (L14) d'alimentation alimenté par le dispositif (4 ; 4, 6, 19) d'air comprimé de réservoir soit avec une sortie (AL1) à l'air libre
et
- dans lequel le moyen (214a) de commande de la pression commande la pression (pFSa) de déclenchement d'accumulateur à ressort de fonctionnement en remorquage, également en fonction d'un signal (Sv ; Sn) de vitesse rapporté au véhicule.

11. Procédé de commande d'accumulateur à ressort suivant la revendication 10,
**caractérisé**
- **en ce que** le moyen (214a) de commande de la pression donne une pression (p4 ; pR) d'un réservoir d'un dispositif (4 ; 4, 6, 19) d'air comprimé de réservoir, indépendamment de la pression (pHL) dans le conduit (HL) d'air principal, comme pression (pFSa) de déclenchement d'accumulateur à ressort de fonctionnement en remorquage, si une valeur indiquée par le signal (Sv ; Sn) de vitesse rapportée au véhicule dépasse une valeur limite donnée à l'avance.

12. Procédé de commande d'accumulateur à ressort suivant la revendication 11,
**caractérisé**
**en ce que** pour la commande, en fonction du signal (Sv ; Sn) de vitesse rapporté au véhicule, de la pression (pFSa) de déclenchement d'accumulateur à ressort du fonctionnement en remorquage, un dispositif (S2) de commande supplémentaire du moyen (214a) de commande de la pression met un deuxième tronçon (L16) du chemin (L15, L16) d'air comprimé de fonctionnement en remorquage, en fonction du signal (Sv ; Sn) de vitesse rapporté au véhicule, en communication soit avec le premier tronçon (L15), soit avec un chemin (L17) d'alimentation supplémentaire alimenté par le dispositif (4 ; 4, 6, 19) d'air comprimé de réservoir.

13. Procédé de commande d'accumulateur à ressort suivant l'une des revendications 10 à 12,
**caractérisé**
**en ce qu'**un autre moyen (214b) de commande de la pression commande une pression (pFSb) de déclenchement d'accumulateur à ressort de fonctionnement actif en fonction d'une demande (FBA) de frein d'accumulateur à ressort mise à disposition en particulier automatiquement et/ou manuellement,
dans lequel, pour la commande, en fonction de la demande (FBA) de frein d'accumulateur à ressort de la pression (pFSb) de déclenchement d'accumulateur à ressort de fonctionnement actif, un autre dispositif (S3) de commande met un chemin (L10) d'air comprimé de fonctionnement actif, en fonction de la demande (FBA) de frein d'accumulateur à ressort, en communication soit avec un autre chemin (L9) d'alimentation alimenté par le dispositif (4 ; 4, 6, 19) d'air comprimé de réservoir, soit avec une autre sortie (AL3) à l'air libre.

14. Procédé de commande d'accumulateur à ressort suivant la revendication 13,
**caractérisé**
**en ce qu'**un moyen (214c) de commutation en mode de fonctionnement
- en fonction d'une demande (UA) de commutation, commute entre le mode de fonctionnement en remorquage et un mode de fonctionnement actif,
- donne, dans le mode de fonctionnement en remorquage, la pression (pFSa) de déclenchement de l'accumulateur à ressort en fonctionnement en remorquage sous la forme d'une pression (pFS) de déclenchement d'accumulateur à ressort et
- donne, dans le mode de fonctionnement actif, la pression (pFSb) de déclenchement d'accumulateur à ressort de fonctionnement actif sous la forme de la pression (pFS) de déclenchement de l'accumulateur à ressort.

15. Procédé de commande d'accumulateur à ressort suivant la revendication 14,
**caractérisé en ce que**
- on alimente un premier raccord d'un moyen (214d ; 214d') de protection de superposition en la pression (pFS) de déclenchement de l'accumulateur à ressort et
- **en ce que** l'on alimente un deuxième raccord du moyen (214d ; 214d') de protection de superposition en une pression (pC ; pC*) de protection de superposition,
- dans lequel le moyen (214d ; 214d') de protection de superposition forme, à partir de la pression (pFS) de déclenchement de l'accumulateur à ressort et de la pression (pC; pC*) de protection de superposition, une pression (pFS_{pC} ; pFS_{pC*}) de déclenchement de l'accumulateur à ressort modifiée, protégée de la superposition d'une force de freinage et la donne à un troisième raccord du moyen (214d ; 214d') de protection de superposition, qui communique, de manière à conduire de l'air comprimé, avec un cylindre (25) de frein à accumulateur à ressort de l'actionneur (11) de frein à accumulateur à ressort.

16. Procédé de commande d'accumulateur à ressort suivant la revendication 15,
**caractérisé**
- **en ce que** l'on se procure, comme pression de protection de superposition, une pression (pC) de frein pneumatique commandée par une unité (BS) de commande de frein ou
- **en ce qu'**en variante on se procure, comme pression de protection de superposition, une pression (pC*) de frein pneumatique réglée par une unité (GS) de régulation de protection de glissement en aval de l'unité (BS) de commande de frein.

17. Procédé de commande d'accumulateur à ressort suivant la revendication 16,
**caractérisé**
- **en ce que**, lors de la commutation du moyen (214c) de commutation du mode de fonctionnement en le mode de fonctionnement en remorquage, on met en communication, de manière à conduire de l'air comprimé, un premier raccord et un troisième raccord du moyen (214c) de commutation en mode de fonctionnement et
- **en ce que**, lors de la commutation du mode (214c) de commutation en mode de fonctionnement dans le mode de fonctionnement actif, on met en communication, de manière à conduire de l'air comprimé, un deuxième raccord et un troisième raccord du moyen (214c) de commutation en mode de fonctionnement,
- dans lequel, le premier raccord du moyen (214c) de commutation en mode de fonctionnement communique, de manière à conduire de l'air comprimé, avec le deuxième tronçon (L16) du chemin (L15, L16) d'air comprimé en fonctionnement en remorquage,
- dans lequel, le deuxième raccord du moyen (214c) de commutation en mode de fonctionnement communique de manière, à conduire de l'air comprimé, avec le chemin (L10) d'air comprimé en fonctionnement actif et
- dans lequel, le troisième raccord du moyen (214c) de commutation en mode de fonctionnement communique, de manière à conduire de l'air comprimé, avec le premier raccord du moyen (214d ; 214d') de protection de superposition.
